# EUROPEAN PATENT SPECIFICATION

(11) **EP 3 022 797 B1**
(45) Date of publication and mention of the grant of the patent: **02.01.2019**
(21) Application number: 14739146.0
(22) Date of filing: 11.07.2014
(51) Int. Cl.: H01M 10/0525, H01M 10/0567, H01M 10/0568, C01B 35/12, H01M 4/38, H01M 4/505, H01M 4/525, H01M 4/58, H01M 10/0569

(54) **USE OF REACTIVE LITHIUM ALKOXYBORATES AS ELECTROLYTE ADDITIVES IN ELECTROLYTES FOR LITHIUM ION BATTERIES**
VERWENDUNG VON REAKTIVEN LITHIUMALKOXYBORATEN ALS ELEKTROLYTADDITIVE IN ELEKTROLYTEN FÜR LITHIUMIONENBATTERIEN
UTILISATION DES ALKOXYBORATES DE LITHIUM RÉACTIFS COMME ADDITIFS D'ÉLECTROLYTE DANS DES ÉLECTROLYTES POUR BATTERIES AU LITHIUM-ION

(30) Priority: 19.07.2013 US 201361856074 P; 19.07.2013 EP 13177152
(43) Date of publication of application: 25.05.2016
(73) Proprietor: BASF SE, 67056 Ludwigshafen am Rhein (DE); Rhode Island Board of Education, State of Rhode Island and Provide Plantations, Providence, RI 02903 (US)
(72) Inventor: GARSUCH, Arnd, 67063 Ludwigshafen (DE); SCHMIDT, Michael, 64342 Seeheim-Jugenheim (DE); LUCHT, Brett, Kingston, RI 02881 (US); XU, Mengqing, Kingston, RI 02881 (US); ZHOU, Liu, Madison, WI 53705-2805 (US)
(74) Representative: BASF IP Association
(86) International application number: PCT/EP2014/064968
(87) International publication number: WO 2015/007659

(56) References cited:
- JP-A- 2000 243 437
- US-A1- 2001 033 964
- MAKOTO MORIYA ET AL: "Plastic crystalline lithium salt with solid-state ionic conductivity and high lithium transport number", CHEMICAL COMMUNICATIONS, vol. 47, no. 22, 21 April 2011 (2011-04-21), page 6311, XP055043731, ISSN: 1359-7345, DOI: 10.1039/c1cc00070e

## Description

The present invention relates to an electrolyte composition (A) containing lithium alkoxyborates, to the use of lithium alkoxyborates in lithium ion batteries and to lithium ion batteries comprising the electrolyte composition (A).

Storing energy has long been a subject of growing interest. Electrochemical cells, for example batteries or accumulators, can serve to store electrical energy. Lithium ion batteries have attracted particular interest since they are superior to the conventional batteries in several technical aspects. For instance, they provide higher energy densities than accumulators based on lead or comparatively noble heavy metals.

In electrochemical cells the ions participating in the electrochemical reaction taking place in the electrochemical cell have to be transferred. For this purpose conducting salts are present in the electrochemical cell. In lithium ion batteries the charge transfer is performed by lithium ions, i.e. lithium ion containing conducting salts are present.

Salts used as conducting salts in lithium ion batteries should meet several requirements like good solubility in the solvent used and electrochemical and thermal stability. The solvated ions should have high ion mobility and low toxicity and should be economic with regard to price.

It is difficult to meet all requirements at the same time. For example, if the diameter of the anion of the salt is increased to decrease the association of the ions, the conductivity of an electrolyte composition containing said salt usually decreases due to the lower mobility of the enlarged anion. Furthermore, the solubility of such salts frequently decreases considerably. The conducting salt best suited has to be determined for every particular application. In regard to lithium ion batteries not all lithium salts are suited, in particular not for the application in high-capacity lithium ion batteries in automotive engineering. The most simple lithium salts are the halides like LiF and LiCI or the oxide LiO₂ which are easily available at low costs. However, their solubility in non-aqueous solvents as used for lithium ion batteries is poor. The preparation of complex lithium salts is laborious and the complex lithium salts are expensive. Lithium salts of strong Lewis acids like aluminum halides (e.g. LiAlF₄, and LiAlCl₄) are not suited, since these salts react with the non-aqueous solvents and with other battery components. Lithium salts derived from strong Brönstedt acids are e.g. lithium trilfluoromethane sulfonate (LiOTF) and lithium bis(trifluoromethyl sulfonyl) imide (LiTFSI). Both are thermally and electrochemically very stable, are non-toxic and insensitive against hydrolysis. But their anions are very reactive and cause corrosion of the materials used as current collector like aluminum. These salts are not reactive, but they fail to passivate aluminum.

Lithium salts comprising complex anions with lower Lewis acidity have been developed like lithium perchlorate (LiClO₄), lithium tetrafluoroborate (LiBF₄), lithium hexafluoroarsenate (LiAsF₆) and lithium hexafluorophosphate (LiPF₆). These salts show very good solubility and electrochemical stability. But the perchlorate anion (ClO₄⁻) is highly reactive; LiBF₄ has a very low conductivity, and LiAsF₆ cannot be used commercially due to the toxicity of the products of the reaction of As(V) to As(III) and As(0). The commonly used LiPF₆ is a compromise, too. It is thermally not very stable and very sensitive to hydrolysis, but shows high conductivity and electrochemical stability and leads to good passivation of the electrodes.

US 2001/033964 A1 relates to a process for the preparation of borate salts, and to the use of said borate salts in electrochemical cells. It was thus an object of the present invention to provide an additive for electrolytes for lithium ion batteries enhancing the long time stability and the thermal stability of the electrolyte composition and of the lithium ion battery. It was another object of the present invention to provide an additive for electrolytes for lithium ion batteries which allows using the electrolyte composition and the lithium ion battery in a broader temperature range. In particular, the additives should be provided which improve the performance of the electrolyte to high voltage (4.5 V vs Li/Li⁺) especially at elevated temperature (>45 °C).
This object is achieved by an electrolyte composition (A) containing
(i) at least one aprotic organic solvent,
(ii) at least one conducting salt different from the at least one compound of formula (I),
(iii) at least one compound of formula (I), 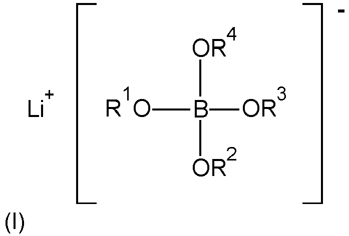 wherein
   R¹, R², R³, and R⁴ are selected independently from each other from C₁-C₁₀ alkyl, C₂-C₁₀ alkenyl, C₂-C₁₀ alkynyl, C₃-C₁₀ cycloalkyl, C₆-C₁₄ aryl and C₅-C₁₄ heteroaryl, wherein alkyl, alkenyl, alkynyl, cycloalkyl, aryl, and heteroaryl may be substituted by one or more substituents selected from F, CN, OR⁵, 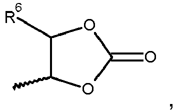 and optionally fluorinated groups selected from C₁-C₄ alkyl, C₂-C₄ alkenyl, C₂-C₄ alkynyl, phenyl, and benzyl,
   wherein R⁴ is different from each R¹, R², and R³,
   R⁵ is selected from H, oligo C₁-C₄ alkylene oxide with 2 to 10 alkylene oxide units, and optionally fluorinated groups selected from C₁-C₄ alkyl, C₂-C₄ alkenyl, C₂-C₄ alkynyl, phenyl, benzyl, and C(O)OC₁-C₁₀ alkyl, and
   R⁶ is selected from H, F and optionally fluorinated C₁-C₄ alkyl; and
(iv) optionally, at least one further additive.

This object is also achieved by the use of the compounds of formula (I) as additives in electrolytes for lithium ion batteries and by lithium ion batteries comprising the electrolyte composition (A).

The electrolyte composition (A) according to the present invention containing at least one compound of formula (I) shows improved retention of discharge capacity after cycling at 55 °C in comparison to electrolyte compositions containing only the conducting lithium salt.

The invention is described in detail below.

The term "C₁-C₁₀ alkyl" as used herein means a straight or branched saturated hydrocarbon group with 1 to 10 carbon atoms having one free valence and includes, e.g., methyl, ethyl, n-propyl, isopropyl, n-butyl, sec-butyl, isobutyl, tert-butyl, n-pentyl, iso-pentyl, 2,2-dimethylpropyl, n-hexyl, iso-hexyl, 2-ethyl hexyl, n-heptyl, iso-heptyl, n-octyl, iso-octyl, n-nonyl, n-decyl and the like. Preferred are C₁-C₆ alkyl groups, more preferred C₁-C₄ alkyl groups and most preferred are 2-propyl, methyl and ethyl.

The term "C₃-C₁₀ cycloalkyl" as used herein means a cyclic saturated hydrocarbon group with 3 to 10 carbon atoms having one free valence and includes, e.g. cyclopropyl, cyclobutyl, cyclopentyl and cyclohexyl. Preferred are C₃-C₆ cycloalkyl.

The term "C₂-C₁₀ alkenyl" as used herein refers to an unsaturated straight or branched hydrocarbon group with 2 to 10 carbon atoms having one free valence, i.e. the hydrocarbon group contains at least one C-C double bond. C₂-C₁₀ alkenyl includes for example ethenyl, 1-propenyl, 2-propenyl, 1-n-butenyl, 2-n-butenyl, iso-butenyl, 1-pentenyl, 1-hexenyl and the like. Preferred are C₂-C₆ alkenyl groups, more preferred C₂-C₄ alkenyl groups and in particular ethenyl and 1-propen-3-yl (allyl).

The term "C₂-C₁₀ alkynyl" as used herein refers to an unsaturated straight or branched hydrocarbon group with 2 to 10 carbon atoms having one free valence, wherein the hydrocarbon group contains at least one C-C triple bond. C₂-C₁₀ alkynyl includes for example ethynyl, 1-propynyl, 2-propynyl, 1-n-butynyl, 2-n-butynyl, iso-butinyl, 1-pentynyl, 1-hexynyl and the like. Preferred are C₂-C₆ alkynyl, more preferred are C₂-C₄ alkynyl, in particular 1-propyn-3-yl (propargyl).

The term "C₆-C₁₄ aryl" as used herein denotes an aromatic 5- to 14-membered hydrocarbon cycle having one free valence. Preferred is C₆ aryl. Examples of C₆-C₁₄ aryl are pheny, naphtyl and anthracyl, preferred is phenyl.

The term "C₅-C₁₄ hetero aryl" as used herein denotes an aromatic 5- to 14-membered hydrocarbon cycle having one free valence wherein at least one C-atom is replaced by N, O or S. Preferred are C₅-C₇ hetero aryl. Examples of C₅-C₁₄ hetero aryl are pyrrolyl, furanyl, thiophenyl, pyridinyl, pyranyl, thiopyranyl and the like.

The term "oligo C₁-C₄ alkylene oxide" as used herein denotes oligomeric alkylene oxides groups, wherein each alkylene group comprises 1 to 4 C-atoms. The alkylene groups are derived from the respective alkyl groups and are also named alkanediyl. The oligo alkylene oxide groups contain 2 up to 10 alkylene oxide units. Examples of alkylene oxide units are methylene oxide (CH₂O), 1,2-ethylene oxide (CH₂CH₂O), 1,3-propylene oxide (CH₂CH₂CH₂O), 1,2-propylene oxide (CH₂CH(CH₃)O), and 1,4-n-butylene oxide (CH₂CH₂CH₂CH₂O). The 2 to 10 alkylene oxide units may be same or different C₁-C₄ alkylene oxide units, e.g. oligomeric homoethylene oxide or oligomeric copolymers of ethylene oxide and propylene oxide. The end groups of the oligomeric alkylene oxides may be OH or OC₁-C₄ alkyl, preferably the end group of the oligomeric alkylene oxides are OC₁-C₄ alkyl. Examples of oligo C₁-C₄ alkylene oxides with 2 to 10 alkylene oxide units are polytetrahydrofurane ((C₄H₈O)₂₋₁₀H), diethylenglycol ((CH₂CH₂O)₂H), triethylene glycol ((CH₂CH₂O)₃H), and diethylene glycol methyl ether ((CH₂CH₂O)₂OCH₃). Preferred are oligo C₂-C₃ alkylene oxides, even more preferred are oligo ethylene oxides.

The term "benzyl" as used herein denotes the group CH₂C₆H₅.

According to the invention the substituents R¹, R², R³, and R⁴ are selected from C₁-C₁₀ alkyl, C₂-C₁₀ alkenyl, C₂-C₁₀ alkynyl, C₃-C₁₀ cycloalkyl, C₆-C₁₄ aryl and C₅-C₁₄ heteroaryl, wherein alkyl, alkenyl, alkynyl, cycloalkyl, aryl, and heteroaryl may be substituted by one or more substituents selected from F, CN, OR⁵, 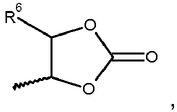 and optionally fluorinated groups selected from C₁-C₄ alkyl, C₂-C₄ alkenyl, C₂-C₄ alkynyl, phenyl, and benzyl,
R⁵ is selected from H, oligo C₁-C₄ alkylene oxide with 2 to 10 alkylene oxide units, and optionally fluorinated groups selected from C₁-C₄ alkyl, C₂-C₄ alkenyl, C₂-C₄ alkynyl, phenyl, benzyl, and C(O)OC₁-C₁₀ alkyl, and
R⁶ is selected from H, F and optionally fluorinated C₁-C₄ alkyl,
Wherein R⁴ is different from each R¹, R², and R³.

Preferably R¹, R², R³, and R⁴ are selected from C₁-C₆ alkyl, C₂-C₆ alkenyl, C₂-C₆ alkynyl, C₃-C₆ cycloalkyl, C₆-C₁₄ aryl and C₅-C₁₄ heteroaryl, wherein alkyl, alkenyl, alkynyl, cycloalkyl, aryl, and heteroaryl may be substituted by one or more substituents selected from F, CN, OR⁵, 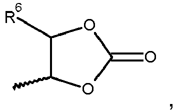 and optionally fluorinated groups selected from C₁-C₄ alkyl, C₂-C₄ alkenyl, C₂-C₄ alkynyl, phenyl, and benzyl,
R⁵ is selected from H, oligo C₂-C₃ alkylene oxide with 2 to 10 alkylene oxide units, and optionally fluorinated groups selected from C₁-C₄ alkyl, C₂-C₄ alkenyl, C₂-C₄ alkynyl, phenyl, benzyl, and C(O)OC₁-C₄ alkyl, and
R⁶ is selected from H, F and optionally fluorinated C₁-C₄ alkyl,
Wherein R⁴ is different from each R¹, R², and R³..

More preferred R¹, R², and R³ are optionally fluorinated C₁-C₆ alkyl, and
R⁴ is selected from C₁-C₁₀ alkyl but bot the same as R¹, R², and R³, C₂-C₁₀ alkenyl, C₂-C₁₀ alkynyl, C₃-C₁₀ cycloalkyl, C₆-C₁₄ aryl and C₅-C₁₄ heteroaryl, wherein alkyl, alkenyl, alkynyl, cycloalkyl, aryl, and heteroaryl may be substituted by one or more substituents selected from F, CN, OR⁵, 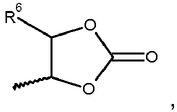 and optionally fluorinated groups selected from C₁-C₄ alkyl, C₂-C₄ alkenyl, C₂-C₄ alkynyl, phenyl, and benzyl,
R⁵ is selected from H, oligo C₁-C₄ alkylene oxide with 2 to 10 alkylene oxide units, and optionally fluorinated groups selected from C₁-C₄ alkyl, C₂-C₄ alkenyl, C₂-C₄ alkynyl, phenyl, benzyl, and C(O)OC₁-C₁₀ alkyl, and
R⁶ is selected from H, F and optionally fluorinated C₁-C₄ alkyl.

Within this embodiment R⁴ is preferably selected from C₁-C₆ alkyl, C₂-C₆ alkenyl, C₂-C₆ alkynyl, C₃-C₆ cycloalkyl, C₆-C₁₄ aryl and C₅-C₁₄ heteroaryl, wherein alkyl, alkenyl, alkynyl, cycloalkyl, aryl, and heteroaryl may be substituted by one or more groups selected from F, CN, OR⁵, 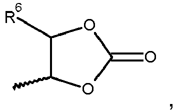 and optionally fluorinated groups selected from C₁-C₄ alkyl, C₂-C₄ alkenyl, C₂-C₄ alkynyl, phenyl, and benzyl,
R⁵ is selected from H, oligo C₁-C₄ alkylene oxide with 2 to 10 alkylene oxide units, and optionally fluorinated groups selected from C₁-C₄ alkyl, C₂-C₄ alkenyl, C₂-C₄ alkynyl, phenyl, benzyl, and C(O)OC₁-C₄ alkyl,
R⁶ is selected from H, F and optionally fluorinated C₁-C₄ alkyl.

More preferred R¹, R², and R³ are CH₃, and
R⁴ is selected from C₂-C₁₀ alkyl, C₂-C₁₀ alkenyl, C₂-C₁₀ alkynyl, C₃-C₁₀ cycloalkyl, C₆-C₁₄ aryl and C₅-C₁₄ heteroaryl, wherein alkyl, alkenyl, alkynyl, cycloalkyl, aryl, and heteroaryl may be substituted by one or more substituents selected from F, CN, OR⁵, 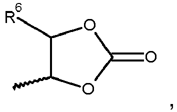 and optionally fluorinated groups selected from C₁-C₄ alkyl, C₂-C₄ alkenyl, C₂-C₄ alkynyl, phenyl, and benzyl,
R⁵ is selected from H, oligo C₁-C₄ alkylene oxide with 2 to 10 alkylene oxide units, and optionally fluorinated groups selected from C₁-C₄ alkyl, C₂-C₄ alkenyl, C₂-C₄ alkynyl, phenyl, benzyl, and C(O)OC₁-C₁₀ alkyl, and
R⁶ is selected from H, F and optionally fluorinated C₁-C₄ alkyl.

Within this embodiment R⁴ is preferably selected from C₂-C₆ alkyl, C₂-C₆ alkenyl, C₂-C₆ alkynyl, C₃-C₆ cycloalkyl, C₆-C₁₄ aryl and C₅-C₁₄ heteroaryl, wherein alkyl, alkenyl, alkynyl, cycloalkyl, aryl, and heteroaryl may be substituted by one or more groups selected from F, CN, OR⁵, 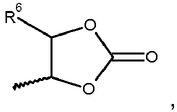 and optionally fluorinated groups selected from C₁-C₄ alkyl, C₂-C₄ alkenyl, C₂-C₄ alkynyl, phenyl, and benzyl,
R⁵ is selected from H, oligo C₁-C₄ alkylene oxide with 2 to 10 alkylene oxide units, and optionally fluorinated groups selected from C₁-C₄ alkyl, C₂-C₄ alkenyl, C₂-C₄ alkynyl, phenyl, benzyl, and C(O)OC₁-C₄ alkyl, and
R⁶ is selected from H, F and optionally fluorinated C₁-C₄ alkyl.

Even more preferred within this embodiment R⁴ is selected from C₁-C₄ alkyl, C₂-C₄ alkenyl, C₂-C₄ alkynyl, C₃-C₆ cycloalkyl, C₆ aryl and C₅-C₇ heteroaryl, wherein alkyl, alkenyl, alkynyl, cycloalkyl, aryl, and heteroaryl may be substituted by one or more groups selected from F, CN, OR⁵, 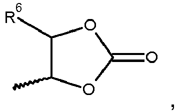 and optionally fluorinated groups selected from C₁-C₄ alkyl, C₂-C₄ alkenyl, C₂-C₄ alkynyl, phenyl, and benzyl, and
R⁵ is selected from H, oligo C₂-C₃ alkylene oxide with 2 to 10 alkylene oxide units, and optionally fluorinated groups selected from C₂-C₃ alkyl, phenyl, benzyl, and C(O)OC₁-C₄ alkyl, and
R⁶ is selected from H, F and optionally fluorinated C₁-C₄ alkyl.

Especially preferred compounds of formula (I) are lithium 3-allyl trimethyl borate, lithium 3-propargyl trimethyl borate, lithium phenyl trimethyl borate, lithium 4-pyridyl trimethyl borate, lithium 3-pyridyl trimethyl borate, lithium 2-pyridyl trimethyl borate, lithium 2,2,2-trifluoroethyl trimethyl borate, lithium glycerol carbonate trimethyl borate, lithium ethylene glycol methyl ether trimethyl borate, lithium diethylene glycol methyl ether trimethyl borate, lithium 4-fluorophenyl trimethyl borate, lithium 2-butynyl trimethyl borate, lithium 3-propionitrile trimethyl borate and lithium trifluoroethyl trimethyl borate.

The preparation of compounds of formula (I) is known to the person skilled in the art. They may be prepared for example from fluorinated 2-propanol derivatives like 1,1,1,3,3,3-hexafluoro-2-propanol and phosgene, oxalyl chloride, carboxylic acid anhydride, alkyl chloroformates and other starting materials. Descriptions of the preparation of compounds of formula (I) can be found in H. J. Kötzsch, Chem. Ber. 1966, pages 1143 to 1148, US 3,359,296, and J. J. Parlow et al., J. Org. Chem. 1997, 62, pages 5908 to 5919.

The concentration of the at least one compound of formula (I) in the electrolyte composition (A) is usually 0.001 to 25 wt.-%, preferred 0.01 to 2.0 wt.-%, more preferred 0.1 to 1 wt.-%, and in particular 0.2 to 0.4 wt.-%, based on the total weight of the electrolyte composition (A).

The electrolyte composition (A) further contains at least one aprotic organic solvent (i), preferably at least two aprotic organic solvents (ii) and more preferred at least three aprotic organic solvents (i). According to one embodiment the electrolyte composition (A) may contain up to ten aprotic organic solvents (i).

The at least one aprotic organic solvent (i) is preferably selected from
(a) cyclic and noncyclic organic carbonates, which may be partly halogenated,
(b) di-C₁-C₁₀-alkylethers, which may be partly halogenated,
(c) di-C₁-C₄-alkyl-C₂-C₆-alkylene ethers and polyethers, which may be partly halogenated,
(d) cyclic ethers, which may be partly halogenated,
(e) cyclic and acyclic acetals and ketals, which may be partly halogenated,
(f) orthocarboxylic acids esters, which may be partly halogenated,
(g) cyclic and noncyclic esters of carboxylic acids, which may be partly halogenated,
(h) Cyclic and noncyclic sulfones, which may be partly halogenated,
(i) Cyclic and noncyclic nitriles and dinitriles, which may be partly halogenated, and
(j) Ionic liquids, which may be partly halogenated.

The aprotic organic solvents (a) to (j) may be partly halogenated, e.g. they may be partly fluorinated, partly chlorinated or partly brominated, and preferably they may be partly fluorinated. "Partly halogenated" means, that one or more H of the respective molecule is substituted by a halogen atom, e.g. by F, Cl or Br. Preference is given to the substitution by F. The at least one solvent (i) may be selected from partly halogenated and non-halogenated aprotic organic solvents (a) to (j), i.e. the electrolyte composition may contain a mixture of partly halogenated and non-halogenated aprotic organic solvents.

More preferred the at least one aprotic organic solvent (i) is selected from cyclic and noncyclic organic carbonates (a), di-C₁-C₁₀-alkylethers (b), di-C₁-C₄-alkyl-C₂-C₆-alkylene ethers and polyethers (c) and cyclic und acyclic acetales and ketales (e), even more preferred electrolyte composition (A) contains at least one aprotic organic solvent (i) selected from cyclic and noncyclic organic carbonates (a) and most preferred electrolyte composition (A) contains at least two aprotic organic solvents (i) selected from cyclic and noncyclic organic carbonates (a), in particular electrolyte composition (A) contains at least one cyclic organic carbonate (a) and at least one noncyclic organic carbonate (a) e.g. ethylene carbonate and diethylcarbonate. The aforementioned preferred organic aprotic solvents may be also partly halogenated, preferably partly fluorinated.

Examples of suitable organic carbonates (a) are cyclic organic carbonates according to the general formula (a1), (a2) or (a3) 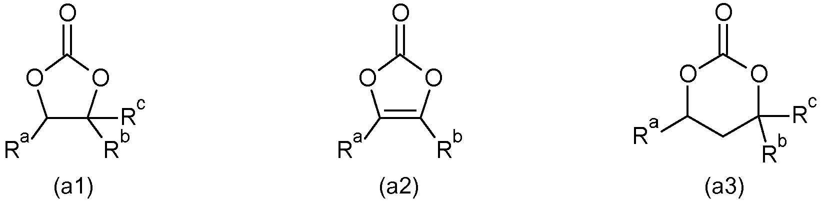 wherein
R^{a}, R^{b} und R^{c} being different or equal and being independently from each other selected from hydrogen; C₁-C₄-alkyl, preferably methyl; F; and C₁-C₄-alkyl substituted by one or more F, e.g. CF₃.

"C₁-C₄-alkyl" is intended to include methyl, ethyl, n-propyl, iso-propyl, n-butyl, iso-butyl, sec.-butyl and tert.-butyl.

Preferred cyclic organic carbonates (a) are of general formula (a1), (a2) or (a3) wherein R^{a}, R^{b} and R^{c} are H. Examples are ethylene carbonate, vinylene carbonate, and propylene carbonate. A preferred cyclic organic carbonate (a) is ethylene carbonate. Further preferred cyclic organic carbonate (a) are difluoroethylene carbonate (a4) and monofluoroethylene carbonate (a5)

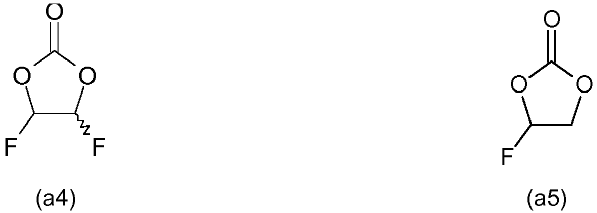

Examples of suitable non-cyclic organic carbonates (a) are dimethyl carbonate, diethyl carbonate, methylethyl carbonate and mixtures thereof.

In one embodiment of the invention the electrolyte composition (A) contains mixtures of non-cyclic organic carbonates (a) and cyclic organic carbonates (a) at a ratio by weight of from 1:10 to 10:1, preferred of from 3:1 to 1:1.

Examples of suitable non-cyclic di-C₁-C₁₀-alkylethers (b) are dimethylether, ethylmethylether, diethylether, diisopropylether, and di-n-butylether.

Examples of di-C₁-C₄-alkyl-C₂-C₆-alkylene ethers (c) are 1,2-dimethoxyethane, 1,2-diethoxyethane, diglyme (diethylene glycol dimethyl ether), triglyme (triethylenglycol dimethyl ether), tetraglyme (tetraethylenglycol dimethyl ether), and diethylenglycoldiethylether.

Examples of suitable polyethers (c) are polyalkylene glycols, preferably poly-C₁-C₄-alkylene glycols and especially polyethylene glycols. Polyethylene glycols may comprise up to 20 mol% of one or more C₁-C₄-alkylene glycols in copolymerized form. Polyalkylene glycols are preferably dimethyl- or diethyl-end capped polyalkylene glycols. The molecular weight M_{w} of suitable polyalkylene glycols and especially of suitable polyethylene glycols may be at least 400 g/mol. The molecular weight M_{w} of suitable polyalkylene glycols and especially of suitable polyethylene glycols may be up to 5 000 000 g/mol, preferably up to 2 000 000 g/mol.

Examples of suitable cyclic ethers (d) are tetrahydrofurane and 1,4-dioxane.

Examples of suitable non-cyclic acetals (e) are 1,1-dimethoxymethane and 1,1-diethoxymethane. Examples for suitable cyclic acetals (e) are 1,3-dioxane and 1,3-dioxolane.

Examples of suitable orthocarboxylic acids esters (f) are tri-C₁-C₄ alkoxy methane, in particular trimethoxymethane and triethoxymethane.

Examples of suitable noncyclic esters of carboxylic acids (g) are ethyl acetate, methyl butanoate, esters of dicarboxylic acids like 1,3-dimethyl propanedioate. An example of a suitable cyclic ester of carboxylic acids (lactones) is γ-butyrolactone.

Examples of suitable noncyclic sulfones (h) are ethyl methyl sulfone and dimethyl sulfone.

Examples of suitable cyclic and noncyclic nitriles and dinitriles (i) are adipodinitrile, acetonitrile, propionitrile, and butyronitrile.

The inventive electrolyte composition (A) furthermore contains at least one conducting salt (ii) which is different from the compounds of formula (I). Electrolyte composition (A) functions as a medium that transfers the ions participating in the electrochemical reaction taking place in the electrochemical cell. The conducting salt(s) (ii) present in the electrolyte are usually solvated in the aprotic organic solvent(s) (i). Preferably the conducting salt (ii) is a lithium salt. The conducting salt is preferably selected from the group consisting of
- Li[F₆₋ₓP(C_{y}F_{2y+1})ₓ], wherein x is an integer in the range from 0 to 6 and y is an integer in the range from 1 to 20;
- Li[B(R¹⁰)₄], Li[B(R¹⁰)₂(OR¹¹O)] and Li[B(OR¹¹O)₂],
   wherein each R¹⁰ is independently from each other selected from F, Cl, Br, l, C₁-C₄ alkyl, C₂-C₄ alkenyl, and C₂-C₄ alkynyl, wherein alkyl, alkenyl, and alkynyl may be substituted by one or more OR¹², wherein R¹² is selected from C₁-C₆ alkyl, C₂-C₆ alkenyl, and C₂-C₆ alkynyl, and
   wherein (OR¹⁰O) is a bivalent group derived from a 1,2- or 1,3-diol, from a 1,2- or 1,3-dicarboxlic acid or from a 1,2- or 1,3-hydroxycarboxylic acid, wherein the bivalent group forms a 5- or 6-membered cycle via the both oxygen atoms with the central B-atom;
- salts of the general formula Li[X(CₙF₂ₙ₊₁SO₂)ₘ], where m and n are defined as follows:
   m = 1 when X is selected from oxygen and sulfur,
   m = 2 when X is selected from nitrogen and phosphorus,
   m = 3 when X is selected from carbon and silicon, and
   n is an integer in the range from 1 to 20,
- LiClO₄; LiAsF₆; LiCF₃SO₃; Li₂SiF₆; LiSbF₆; LiAlCl₄, Li[N(SO₂F)₂], lithium tetrafluoro (oxalato) phosphate; and lithium oxalate.

Suited 1,2- and 1,3-diols from which the bivalent group (OR¹¹O) is derived may be aliphatic or aromatic and may be selected, e.g., from 1,2-dihydroxybenzene propane-1,2-diol, butane-1,2-diol, propane-1,3-diol, butan-1,3-diol, cyclohexyl-trans-1,2-diol or naphthalene-2,3-diol which are optionally are substituted by one or more F and/or by at least one straight or branched non fluorinated, partly fluorinated or fully fluorinated C₁-C₄ alkyl group. An example for such 1,2- or 1,3-diol is 1,1,2,2-tetra(trifluoromethyl)-1,2-ethane diol.

Suited 1,2- or 1,3-dicarboxlic acids from which the bivalent group (OR¹¹O) is derived may be aliphatic or aromatic, for example oxalic acid, malonic acid (propane-1,3-dicarboxylic acid), phthalic acid or isophthalic acid, preferred is oxalic acid. The 1,2- or 1,3-dicarboxlic acids are optionally are substituted by one or more F and/or by at least one straight or branched non fluorinated, partly fluorinated or fully fluorinated C₁-C₄ alkyl group.

Suited 1,2- or 1,3-hydroxycarboxylic acids from which the bivalent group (OR¹¹O) is derived may be aliphatic or aromatic, for example salicylic acid, tetrahydro salicylic acid, malic acid, 2-hydroxy acetic acid, which are optionally are substituted by one or more F and/or by at least one straight or branched non fluorinated, partly fluorinated or fully fluorinated C₁-C₄ alkyl group. An example for such 1,2- or 1,3-hydroxycarboxylic acids is 2,2-bis(trifluoromethyl)-2-hydroxy-acetic acid.

Examples of Li[B(R¹⁰)₄], Li[B(R¹⁰)₂(OR¹¹O)] and Li[B(OR¹¹O)₂] are LiBF₄, lithium difluoro oxalato borate and lithium dioxalato borate.

Preferably the at least one conducting salt (ii) is selected from LiPF₆, LiBF₄, and LiPF₃(CF₂CF₃)₃, more preferred the conducting salt (ii) is selected from LiPF₆ and LiBF₄, and the most preferred conducting salt (ii) is LiPF₆.

The at least one conducting salt (ii) is usually present at a minimum concentration of at least 0.01 wt.-%, preferably of at least 0.5 wt.-%, more preferred of at least 1 wt.-%, and most preferred of at least 5 wt.-%, based on the total weight of the electrolyte composition. Usually the upper concentration limit for the at least one conducting salt (ii) is 25 wt.-%, based on the total weight of the electrolyte composition.
Moreover, the inventive electrolyte composition (A) may contain at least one further additive (iv). The at least one further additive (iv) may be selected from the group consisting of vinylene carbonate and its derivatives, vinyl ethylene carbonate and its derivatives, methyl ethylene carbonate and its derivatives, lithium (bisoxalato) borate, lithium difluoro (oxalato) borate, lithium tetrafluoro (oxalato) phosphate, lithium oxalate, 2-vinyl pyridine, 4-vinyl pyridine, cyclic exo-methylene carbonates, sultones, cyclic and acyclic sulfonates, cyclic and acyclic sulfites, cyclic and acyclic sulfinates, organic esters of inorganic acids, acyclic and cyclic alkanes having a boiling point at 1 bar of at least 36 °C, and aromatic compounds, optionally halogenated cyclic and acyclic sulfonylimides, optionally halogenated cyclic and acyclic phosphate esters, optionally halogenated cyclic and acyclic phosphines, optionally halogenated cyclic and acyclic phosphites including, optionally halogenated cyclic and acyclic phosphazenes, optionally halogenated cyclic and acyclic silylamines, optionally halogenated cyclic and acyclic esters, optionally halogenated cyclic and acyclic amides, optionally halogenated cyclic and acyclic anhydrides, optionally halogenated organic heterocycles.
Examples of suitable aromatic compounds are biphenyl, cyclohexylbenzene and 1,4-dimethoxy benzene.
Sultones may be substituted or unsubstituted. Examples for suitable sultones are propane sultone (iv a), butane sultone (iv b) and propene sultone (iv c) as shown below: 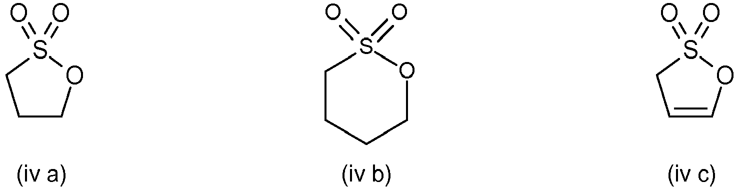 Examples for suitable cyclic exo-methylene carbonates are compound of formula (iv d) 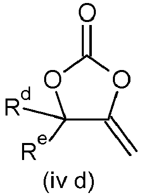 wherein R^{d} and R^{e} may be same or different and are independently from each other selected from C₁-C₁₀ alkyl, and hydrogen. Preferably both R^{d} and R^{e} are methyl. Also preferred both R^{d} and R^{e} are hydrogen. A preferred cyclic exo-methylene carbonate is methylenethylene carbonate.

Furthermore, additive (iv) may be selected from acyclic or cyclic alkanes, preferably alkanes having at a pressure of 1 bar a boiling point of at least 36°C. Examples of such alkanes are cyclohexane, cycloheptane und cyclododecane.

Further compounds suitable as additives (iv) are organic ester of inorganic acids like ethyl ester or methyl ester of phosphoric acid or sulfuric acid.

Usually additive (iv) is selected to be different from the compounds selected as conducting salt (ii), from the compounds selected as organic aprotic solvents (i) and from the compounds of formula (I) (iii) present in the respective electrolyte composition (A).

According to one embodiment of the present invention the electrolyte composition contains at least one further additive (iv). If one or more further additives (iv) are present in the electrolyte composition (A), the total concentration of further additives (iv) is at least 0.001 wt.-%, preferred 0.005 to 10 wt.-% and most preferred 0.01 to 5 wt.-%, based on the total weight of the electrolyte composition (A).

The inventive electrolyte composition is preferably essentially water free, i.e. the water content of the inventive electrolyte composition is below 100 ppm, more preferred below 50 ppm, most preferred below 30 ppm. The term "ppm" denotes parts per million based on the weight of the total electrolyte composition. Various methods are known to the person skilled in the art to determine the amount of water present in the electrolyte composition. A method well suited is the titration according to Karl Fischer, e.g. described in detail in DIN 51777 or IS0760: 1978.

The electrolyte composition (A) of the inventive lithium ion battery is preferably liquid at working conditions; more preferred it is liquid at 1 bar and 25 °C, even more preferred the electrolyte composition is liquid at 1 bar and -15 °C, most preferred the electrolyte composition is liquid at 1 bar and -30 °C, and in particular preferred the electrolyte composition is liquid at 1 bar and -50 °C.

In a preferred embodiment of the present invention the electrolyte composition contains at least two aprotic solvents (i) selected from cyclic and noncyclic organic carbonates (a), at least one compound of formula (I), at least one conducting salt (ii) selected from LiBF₄ and LiPF₆, and at maximum up to 100 ppm water.

Preference is further given to electrolyte composition (A), wherein the electrolyte composition contains
(i) from 60 to 99.98 wt.-% of the at least one aprotic organic solvent,
(ii) from 0.01 to 25 wt.-% of the at least one conducting salt different from the at least one compound of formula (I),
(iii) from 0.01 to 25 wt.-% of the at least one compound of formula (I), and
(iv) from 0 to 10 wt.-% of the at least one further additive,
based on the total weight of the electrolyte composition.

Li ion batteries comprising electrolyte composition (A) as described above show increased capacity retention in comparison to lithium ion batteries comprising the same electrolyte without compound of formula (I).

A further object of the present invention is the use of one or more compounds of formula (I) as described above in detail as component (iii) of the inventive electrolyte composition (A) as additive(s) in electrolytes for lithium ion batteries. The at least compound of formula (I) is usually used by adding the compound(s) of formula (I) to the electrolyte. Usually the compound of formula (I) is added in amounts yielding electrolyte compositions containing the above described concentrations of compound of formula (I).

Another object of the present invention is a lithium ion battery comprising
(A) the electrolyte composition as described above in detail,
(B) at least one cathode comprising a cathode active material, and
(C) at least one anode comprising an anode active material.

In the context of the present invention the term "lithium ion battery" means a rechargeable electrochemical cell wherein during discharge lithium ions move from the negative electrode (anode) to the positive electrode (cathode) and during charge the lithium ions move from the positive electrode to the negative electrode, i.e. the charge transfer is performed by lithium ions. Usually lithium ion batteries comprise as cathode active material a transition metal compound capable of occluding and releasing lithium ions, for example transition metal oxide compounds with layer structure like LiCoO₂, LiNiO₂, and LiMnO₂; transition metal phosphates having olivine structure like LiFePO₄ and LiMnPO₄; or lithium-manganese spinels which are known to the person skilled in the art in lithium ion battery technology.

The term "cathode active material" denotes the electrochemically active material in the cathode, in the case of lithium ion batteries the cathode active material may be a transition metal oxide intercalating/deintercalating lithium ions during charge/discharge of the battery. Depending on the state of the battery, i.e. charged or discharged, the cathode active material contains more or less lithium ions. The term "anode active material" denotes the electrochemically active material in the anode, in the case of lithium ion batteries the anode active material is a material capable of occluding and releasing lithium ions during charge/discharge of the battery.

The cathode (B) comprised within the electrochemical of the present invention comprises a cathode active material that can reversibly occlude and release lithium ions. Cathode active materials that can be used include, without being limited to, lithiated transition metal phosphates of olivine structure like LiFePO₄, LiCoPO₄, and LiMnPO₄; lithium ion intercalating transition metal oxides with layer structure like LiMnO₂, LiCoO₂, LiNiO₂ and especially those having the general formula Li_{(1+z)}[NiₐCo_{b}Mn_{c}]_{(1-z)}O₂₊ₑ wherein z is 0 to 0.3, a, b and c may be same or different and are independently 0 to 0.8 wherein a + b + c = 1 and -0.1 ≤ e ≤ 0.1; and lithiated transition metal mixed oxides of spinel structure.

In one preferred embodiment the cathode active material is LiFePO₄ or LiCoPO₄. The cathode containing LiCoPO₄ as cathode active material may also be referred to as LiCoPO₄ cathode. The LiCoPO₄ may be doped with Fe, Mn, Ni, V, Mg, Al, Zr, Nb, Tl, Ti, K, Na, Ca, Si, Sn, Ge, Ga, B, As, Cr, Sr, or rare earth elements, i.e., a lanthanide, scandium and yttrium. LiCoPO₄ with olivine structure is particularly suited according the present invention due to its high operating voltage (red-ox potential of 4.8 V vs. Li/Li⁺), flat voltage profile and a high theoretical capacity of about 170mAh/g. The cathode may comprise a LiCoPO₄/C or LiFePO₄/C composite material. The preparation of a suited cathode comprising a LiCoPO₄/C or LiFePO₄/C composite material is described in Markevich, Electrochem. Comm. 15, 2012, 22 to 25.

In another preferred embodiment of the present invention the cathode active material is selected from transition metal oxides with layer structure having the general formula Li_{(1+z)}[NiₐCo_{b}Mn_{c}]_{(1-z)}O₂₊ₑ wherein z is 0 to 0.3; a, b and c may be same or different and are independently 0 to 0.8 wherein a + b + c = 1; and -0.1 ≤ e ≤ 0.1. Examples for such transition metal oxides with layer structure include those in which [NiₐCo_{b}Mn_{c}] is selected from the group Ni_{0.33}Co_{0.33}Mn_{0.33}, Ni_{0.5}Co_{0.2}Mn_{0.3}, Ni_{0.33}Co₀Mn_{0.66}, Ni_{0.25}Co₀Mn_{0.75}, Ni_{0.35}Co_{0.15}Mn_{0.5}, Ni_{0,21}Co_{0,08}Mn_{0,71} and Ni_{0,22}Co_{0,12}Mn_{0,66}. Preferred are transition metal oxides with layer structure having the general formula Li_{(1+z)}[NiₐCo_{b}Mn_{c}]_{(1-z)}O₂₊ₑ wherein z is 0.05 to 0.3, a = 0.2 to 0.5, b = 0 to 0.3 and c = 0.4 to 0.8 wherein a + b + c = 1; and -0.1 ≤ e ≤ 0.1. Especially preferred the manganese-containing transition metal oxides with layer structure are selected from those in which [NiₐCo_{b}Mn_{c}] is selected from Ni_{0.33}Co₀Mn_{0.66}, Ni_{0.25}Co₀Mn_{0.75}, Ni_{0.35}Co_{0.15}Mn_{0.5}, Ni_{0,21}Co_{0,08}Mn_{0,71} and Ni_{0,22}Co_{0,12}Mn_{0,66}, in particular preferred are Ni_{0,21}Co_{0,08}Mn_{0,71} and Ni_{0,22}Co_{0,12}Mn_{0,66}.

According to a further preferred embodiment of the present invention the cathode active material is selected from lithiated transition metal mixed oxides of spinel structure. Those are those of general formula Li₁₊ₜM₂₋ₜO_{4-d} wherein d is 0 to 0.4, t is 0 to 0.4, while more than 60 mol% of M is manganese. Further M's, from which not more than 30 mol% is chosen, are one or more metals from groups 3 to 12 of the periodic table, for example Ti, V, Cr, Fe, Co, Ni, Zn, Mo, with preference being given to Co and Ni, and especially Ni. An example of a suited manganese-containing spinel of the general formula is LiNi_{0,5}Mn_{1,5}O_{4-d}.

Many elements are ubiquitous. For example, sodium, potassium and chloride are detectable in certain very small proportions in virtually all inorganic materials. In the context of the present invention, proportions of less than 0.5% by weight of cations or anions are disregarded. Any lithium ion-containing mixed transition metal oxide comprising less than 0.5% by weight of sodium is thus considered to be sodium-free in the context of the present invention. Correspondingly, any lithium ion-containing mixed transition metal oxide comprising less than 0.5% by weight of sulfate ions is considered to be sulfate-free in the context of the present invention.

The cathode may comprise one or more further constituents. For example, the cathode may comprise carbon in a conductive polymorph, for example selected from graphite, carbon black, carbon nanotubes, expanded graphite, graphene or mixtures of at least two of the aforementioned substances. In addition, the cathode may comprise one or more binders, for example one or more organic polymers like polyethylene, polyacrylonitrile, polybutadiene, polypropylene, polystyrene, polyacrylates, polyisoprene and copolymers of at least two comonomers selected from ethylene, propylene, styrene, (meth)acrylonitrile and 1,3-butadiene, especially styrene-butadiene copolymers, polyvinylidene fluoride (PVdF), polytetrafluoroethylene, copolymers of tetrafluoroethylene and hexafluoropropylene, copolymers of tetrafluoroethylene and vinylidene fluoride and polyacrylnitrile

Furthermore, the cathode may comprise a current collector which may be a metal wire, a metal grid, a metal web, a metal sheet, a metal foil or a metal plate. A suited metal foil is aluminum foil.

According to one embodiment of the present invention the cathode has a thickness of from 25 to 200 µm, preferably of from 30 to 100 µm, based on the whole thickness of the cathode without the thickness of the current collector.

The anode (C) comprised within the electrochemical of the present invention comprises an anode active material that can reversibly occlude and release lithium ions. Anode active materials that can be used include, without being limited to, carbon that can reversibly occlude and release lithium ions. Suited carbon materials are crystalline carbon such as a graphite material, more particularly, natural graphite, graphitized cokes, graphitized MCMB, and graphitized MPCF; amorphous carbon such as coke, mesocarbon microbeads (MCMB) fired below 1500°C, and mesophase pitch-based carbon fiber (MPCF); hard carbon and carbonic anode active material (thermally decomposed carbon, coke, graphite) such as a carbon composite, combusted organic polymer, and carbon fiber.

Further anode active materials are lithium metal, or materials containing an element capable of forming an alloy with lithium. Non-limiting examples of materials containing an element capable of forming an alloy with lithium include a metal, a semimetal, or an alloy thereof. It should be understood that the term "alloy" as used herein refers to both alloys of two or more metals as well as alloys of one or more metals together with one or more semimetals. If an alloy has metallic properties as a whole, the alloy may contain a nonmetal element. In the texture of the alloy, a solid solution, a eutectic (eutectic mixture), an intermetallic compound or two or more thereof coexist. Examples of such metal or semimetal elements include, without being limited to, titanium (Ti), tin (Sn), lead (Pb), aluminum, indium (In), zinc (Zn), antimony (Sb), bismuth (Bi), gallium (Ga), germanium (Ge), arsenic (As), silver (Ag), hafnium (Hf), zirconium (Zr) yttrium (Y), and silicon (Si). Metal and semimetal elements of Group 4 or 14 in the long-form periodic table of the elements are preferable, and especially preferable are titanium, silicon and tin, in particular silicon and tin. Examples of tin alloys include ones having, as a second constituent element other than tin, one or more elements selected from the group consisting of silicon, magnesium (Mg), nickel, copper, iron, cobalt, manganese, zinc, indium, silver, titanium (Ti), germanium, bismuth, antimony and chromium (Cr). Examples of silicon alloys include ones having, as a second constituent element other than silicon, one or more elements selected from the group consisting of tin, magnesium, nickel, copper, iron, cobalt, manganese, zinc, indium, silver, titanium, germanium, bismuth, antimony and chromium.

A further possible anode active material is silicon which is able to occlude and release lithium ions. The silicon may be used in different forms, e.g. in the form of nanowires, nanotubes, nanoparticles, films, nanoporous silicon, powder of crystalline silicon or silicon nanotubes. The silicon may be deposited on a current collector. The current collector may be a metal wire, a metal grid, a metal web, a metal sheet, a metal foil or a metal plate. Preferred the current collector is a metal foil, e.g. a copper foil. Thin films of silicon may be deposited on metal foils by any technique known to the person skilled in the art, e.g. by sputtering techniques. One possibility of preparing Si thin film electrodes are described in R. Elazari et al.; Electrochem. Comm. 2012, 14, 21-24. It is also possible to use a silicon/carbon composite as anode active material according to the present invention. The carbon is preferably selected from conductive carbon materials like graphite, carbon black, carbon nanotubes, expanded graphite, graphene or mixtures thereof.

Other possible anode active materials are lithium ion intercalating oxides of Ti.

Preferably the anode active material present in the inventive lithium ion secondary battery is selected from carbon that can reversibly occlude and release lithium ions, particularly preferred the carbon that can reversibly occlude and release lithium ions is selected from crystalline carbon, hard carbon and amorphous carbon, and in particular preferred is graphite. In another preferred embodiment the anode active material present in the inventive lithium ion secondary battery is selected from tin and from silicon that can reversibly occlude and release lithium ions, in particular silicon in form of thin films or silicon/carbon composites. In a further preferred embodiment the anode active material present in the inventive lithium ion secondary battery is selected from oxides of Ti which are able to occlude and release lithium ions. Further preference is given to lithium, lithium alloys and materials capable of forming lithium alloys, preferably tin. According to one embodiment of the present invention the anode active material contains tin or silicon.

The anode and cathode may be made by preparing an electrode slurry composition by dispersing the electrode active material, a binder, optionally a conductive material and a thickener, if desired, in a solvent and coating the slurry composition onto a current collector. The current collector may be a metal wire, a metal grid, a metal web, a metal sheet, a metal foil or a metal plate. Preferred the current collector is a metal foil, e.g. a copper foil or aluminum foil.

The inventive electrochemical cells may contain further constituents customary per se, for example output conductors, separators, housings, cable connections etc. Output conductors may be configured in the form of a metal wire, metal grid, metal mesh, expanded, metal, metal sheet or metal foil. Suitable metal foils are especially aluminum foils. Suited separators are for example glass fiber separators and polymer-based separators like polyolefin separators. The housing may be of any shape, for example cuboidal or in the shape of a cylinder. In another embodiment, inventive electrochemical cells have the shape of a prism. In one variant, the housing used is a metal-plastic composite film processed as a pouch.

The present invention therefore also further provides for the use of inventive electrochemical cells in devices, especially in mobile devices. Examples of mobile devices are vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven staplers. The inventive electrochemical cells may also be used for stationary power storage.

The invention is illustrated by the following examples, which do not, however, restrict the invention.

### I. Preparation of the lithium-alkoxyborates

The reactions and work-up was performed in a glove-box under N₂.
0.02 mol of an alcohol (ROH) (95%, Aldrich) was dissolved in 100 ml of THF. 12.5 mL (2.0 mol) of n-butyl lithium (1.6 M solution in hexane, Aldrich) was added to the solution. The reaction mixture was stirred for an hour to allow the respective LiOR to precipitate. The precipitate was filtered off and subsequently washed with small amount of diethyl ether and dried under vacuum overnight. The LiOR so obtained was characterized by ¹H and ¹³C NMR spectroscopy.

0.005 mol of the respective lithium salt LiOR was added to a flask containing 20 ml of THF, and 3.4 mL (0.03 mol) of trimethyl borate was added. A mixture was obtained. After stirring the mixture for a week the white solid formed was filtered off in. The white solid obtained was dried under vacuum in the antechamber of the glove-box for 12 hours.

The product was characterized by ¹H, ¹³C and ¹¹B nuclear magnetic resonance (NMR) spectroscopy.

All compounds prepared are summarized in Table 1.

**Table 1**

| Sample | ROH | Structure |
|---|---|---|
| 1 | 4-hydroxypyridin | 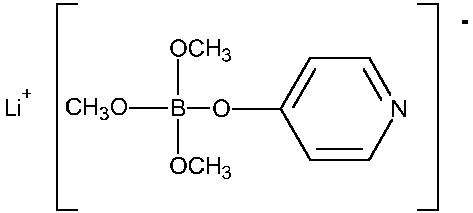 |
| 2 | 3-hydroxypropionitrile | 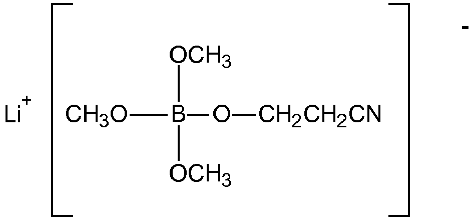 |
| 3 | CH₃OCH₂CH₂OH | 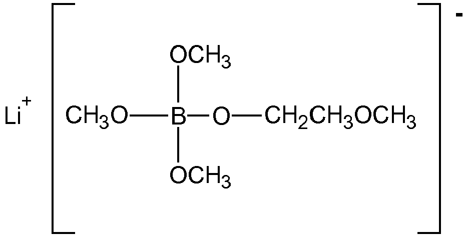 |
| 4 | 4-fluorophenol | 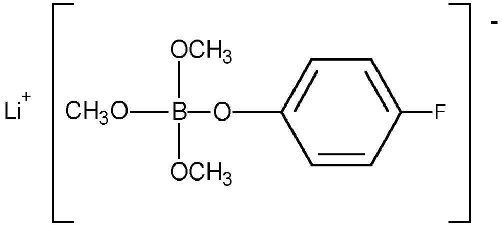 |
| 5 | CF₃CH₂OH | 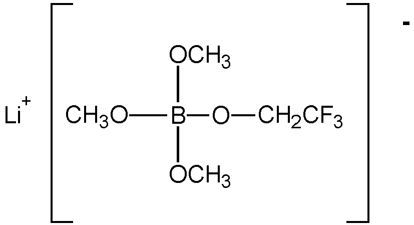 |
| 6 | 2-butyn-1-ol | 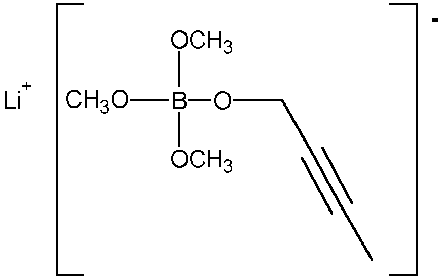 |
| 7 | phenol | 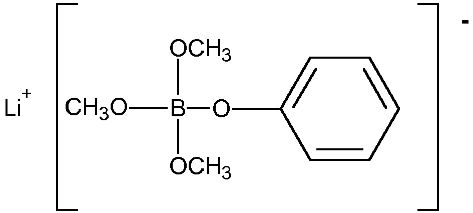 |
| 8 | 2-propen-1-ol | 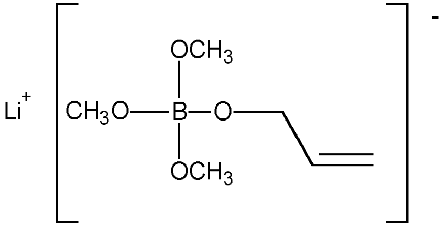 |
| 9 | 2-propyn-1-ol | 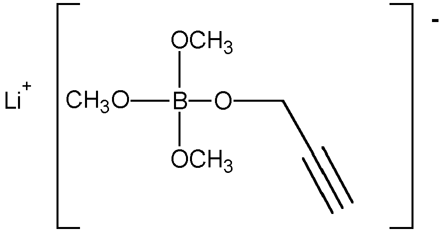 |

### II. Cell preparation and electrochemical measurements

Coin cells were assembled with 2032-type coin cell parts from Pred Materials (USA), including SUS 304 Al-clad cases, SUS 316L caps, PP gaskets, disk spacers of 15.5 mm diameter and 1.0 mm of thickness, and wave springs of 15 mm diameter and 1.4 mm of thickness. The cells were built with cathode active material LiNi_{0.5}Mn_{1.5}O₄ (d = 14.7 mm) and graphite anode (d=15.0 mm), a piece of Setela E20MM polyolefin separator (d = 19 mm) and 40 µL (20 µL × 2) of electrolyte in each cell in an Ar-filled glove box. The water content is smaller than 0.1 ppm. Battery- grade of carbonates solvents and lithium hexafluorophosphate (LiPF₆) were obtained from Novolyte. The comparative electrolyte composition was 1.0 M LiPF₆ in EC/EMC (3:7 vol). The inventive electrolyte compositions were prepared by adding the compounds of formula (I) to the comparative electrolyte composition with concentration of the respective compound of formula (I) of 1 weight percent of the total mass of electrolyte composition.

All of the cells were cycled between 4.25 ∼ 4.8 V for 20 cycles at room temperature (25 °C) and 30 cycles at elevated temperature (55 °C) on an Arbin cycler and the temperature was controlled by Fisher Scientific Isotemp Incubators. All cells were sealed with epoxy before cycling. The details of the protocol are as follows, Formation (5 cycles in total, 1 C/20, 2 C/10, 2 C/5) and cycling (15 cycles, C/5) at room temperature (25 °C) followed by cycling at elevated temperature (30 cycles, C/5). For each sample 1 to 3 experiments were conducted.

Table 2 shows the cycling performance of the cells with and without additives. The capacity retention rate at room temperature was calculated by comparing the discharge capacity of 20^{th} cycle to that of 6^{th} cycle (the first cycle after 5 formation cycles). The capacity retention rate at elevated temperature was calculated by dividing the discharge capacity of 50^{th} cycle by that of 6^{th} cycle (the first cycle after 5 formation cycles). The efficiency of the first cycle is the ratio of the discharge capacity to the charge capacity of the first cycle.

**Table 2: Cycling performance of the cells with and without additive.**

| Electrolyte | Cell No. | 1 st Cycle Efficiency | Capacity Retention After 20 cycles at RT [%] | Capacity Retention After 30 cycles at ET [%] |
|---|---|---|---|---|
| Baseline (LiPF₆)) | 1 | 72.8 | 95.9 | 37.8 |
| | 2 | 77.0 | 94.4 | 36.7 |
| Sample 1 (1% lithium 4-pyridyl trimethyl borate) | 1 | 74.9 | 94.1 | 63.6 |
| | 5 | 74.5 | 93.7 | 72.6 |
| Sample 2 (1% lithium 3-hydroxy-propionnitrille trimethyl borate) | 1 | 59.3 | 97.4 | 71.8 |
| | 2 | 60.9 | 100 | 74.8 |
| Sample 3 (1% lithium 2-methylethoxy trimethyl borate) | 1 | 50.6 | 99.3 | 64.8 |
| | 2 | 53.8 | 95.3 | 66.2 |
| | 3 | 60.9 | 96.3 | 57.3 |
| Sample 4 (1% lithium 4-fluorophenol trimethyl borate) | 2 | 48.8 | 96.8 | 94.8 |
| Sample 5 (1% lithium trifluoroethyl trimethyl borate) | 1 | 58.1 | 100 | 79.3 |
| | 2 | 63.8 | 94.3 | 99.5 |
| Sample 6 (1% lithium 2-butynyl trimethyl borate | 2 | 56.2 | 92.8 | 67.1 |
| | 4 | 56.8 | 92.4 | 55,5 |
| Sample 7 (1% lithium phenyl trimethyl borate) | 5 | 58.3 | 115 | 63.5 |
| | 6 | 58.2 | 120 | 58.4 |
| Sample 8 (1% lithium allyl trimethyl borate) | 1 | 65.9 | 103 | 53.2 |
| | 4 | 64.1 | 94.2 | 42.6 |
| Sample 9 (1% lithium propargyl trimethyl borate) | 2 | 53.6 | 90.1 | 62.4 |
| | 3 | 60.9 | 93.7 | 55.2 |

## Claims

1. An electrolyte composition (A) containing
(i) at least one aprotic organic solvent,
(ii) at least one conducting salt different from the at least one compound of formula (I),
(iii) at least one compound of formula (I), 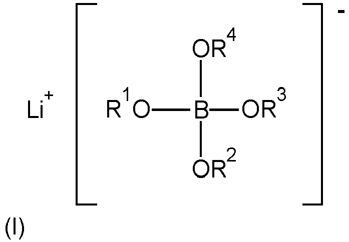 wherein
R¹, R², R³, and R⁴ are selected from C₁-C₁₀ alkyl, C₂-C₁₀ alkenyl, C₂-C₁₀ alkynyl, C₃-C₁₀ cycloalkyl, C₆-C₁₄ aryl and C₅-C₁₄ heteroaryl, wherein alkyl, alkenyl, alkynyl, cycloalkyl, aryl, and heteroaryl may be substituted by one or more substituents selected from F, CN, OR⁵, 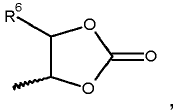 and optionally fluorinated groups selected from C₁-C₄ alkyl, C₂-C₄ alkenyl, C₂-C₄ alkynyl, phenyl, and benzyl, wherein R⁴ is different from each R¹, R², and R³,
R⁵ is selected from H, oligo C₁-C₄ alkylene oxide with 2 to 10 alkylene oxide units, and optionally fluorinated groups selected from C₁-C₄ alkyl, C₂-C₄ alkenyl, C₂-C₄ alkynyl, phenyl, benzyl, and C(O)OC₁-C₁₀ alkyl,
R⁶ is selected from H, F and optionally fluorinated C₁-C₄ alkyl; and
(iv) optionally, at least one further additive.

2. The electrolyte composition according to claim 1, wherein at least one compound of formula (I) is selected from compounds of formula (I) with
R¹, R², R³, and R⁴ are selected independently from each other from C₁-C₆ alkyl, C₂-C₆ alkenyl, C₂-C₆ alkynyl, C₃-C₆ cycloalkyl, C₆-C₁₄ aryl and C₅-C₁₄ heteroaryl, wherein alkyl, alkenyl, alkynyl, cycloalkyl, aryl, and heteroaryl may be substituted by one or more substituents selected from F, CN, OR⁵, 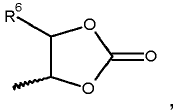 and optionally fluorinated groups selected from C₁-C₄ alkyl, C₂-C₄ alkenyl, C₂-C₄ alkynyl, phenyl, and benzyl,
R⁵ is selected from H, oligo C₂-C₃ alkylene oxide with 2 to 10 alkylene oxide units, and optionally fluorinated groups selected from C₁-C₄ alkyl, C₂-C₄ alkenyl, C₂-C₄ alkynyl, phenyl, benzyl, and C(O)OC₁-C₄ alkyl,
R⁶ is selected from H, F and optionally fluorinated C₁-C₄ alkyl.

3. The electrolyte composition according to claim 1 or 2, wherein the at least one compound of formula (I) is selected from compounds of formula (I) with
R¹, R², and R³ are optionally fluorinated C₁-C₆ alkyl, and
R⁴ is selected from C₁-C₆ alkyl, C₂-C₆ alkenyl, C₂-C₆ alkynyl, C₃-C₆ cycloalkyl, C₆-C₁₄ aryl and C₅-C₁₄ heteroaryl, wherein alkyl, alkenyl, alkynyl, cycloalkyl, aryl, and heteroaryl may be substituted by one or more groups selected from F, CN, OR⁵, 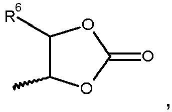 and optionally fluorinated groups selected from C₁-C₄ alkyl, C₂-C₄ alkenyl, C₂-C₄ alkynyl, phenyl, and benzyl,
R⁵ is selected from H, oligo C₁-C₄ alkylene oxide with 2 to 10 alkylene oxide units, and optionally fluorinated groups selected from C₁-C₄ alkyl, C₂-C₄ alkenyl, C₂-C₄ alkynyl, phenyl, benzyl, and C(O)OC₁-C₄ alkyl,
R⁶ is selected from H, F and optionally fluorinated C₁-C₄ alkyl.

4. The electrolyte composition according to claim 1, wherein the at least one compound of formula (I) is selected from compounds of formula (I) with
R¹, R², and R³ are CH₃, and
R⁴ is selected from C₂-C₁₀ alkyl, C₂-C₁₀ alkenyl, C₂-C₁₀ alkynyl, C₃-C₁₀ cycloalkyl, C₆-C₁₄ aryl and C₅-C₁₄ heteroaryl, wherein alkyl, alkenyl, alkynyl, cycloalkyl, aryl, and heteroaryl may be substituted by one or more substituents selected from F, CN, OR⁵, 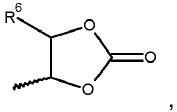 and optionally fluorinated groups selected from C₁-C₄ alkyl, C₂-C₄ alkenyl, C₂-C₄ alkynyl, phenyl, and benzyl,
R⁵ is selected from H, oligo C₁-C₄ alkylene oxide with 2 to 10 alkylene oxide units, and optionally fluorinated groups selected from C₁-C₄ alkyl, C₂-C₄ alkenyl, C₂-C₄ alkynyl, phenyl, benzyl, and C(O)OC₁-C₁₀ alkyl, and
R⁶ is selected from H, F and optionally fluorinated C₁-C₄ alkyl.

5. The electrolyte composition according to any of claims 1 to 4, wherein the at least one compound of formula (I) is selected from compounds of formula (I) with
R¹, R², and R³ are CH₃, and
R⁴ is selected from C₂-C₄ alkyl, C₂-C₄ alkenyl, C₂-C₄ alkynyl, C₃-C₆ cycloalkyl, C₆ aryl and C₅-C₇ heteroaryl, wherein alkyl, alkenyl, alkynyl, cycloalkyl, aryl, and heteroaryl may be substituted by one or more groups selected from F, CN, OR⁵, 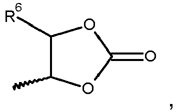 and optionally fluorinated groups selected from C₁-C₄ alkyl, C₂-C₄ alkenyl, C₂-C₄ alkynyl, phenyl, and benzyl, and
R⁵ is selected from H, oligo C₂-C₃ alkylene oxide with 2 to 10 alkylene oxide units, and optionally fluorinated groups selected from C₁-C₄ alkyl, phenyl, benzyl, and C(O)OC₁-C₄ alkyl,
R⁶ is selected from H, F and optionally fluorinated C₁-C₄ alkyl,.

6. The electrolyte composition according to any of claims 1 to 5, wherein the at least one compound of formula (I) is selected from lithium 3-allyl trimethyl borate, lithium 3-propargyl trimethyl borate, lithium phenyl trimethyl borate, lithium 4-pyridyl trimethyl borate, lithium 3-pyridyl trimethyl borate, lithium 2-pyridyl trimethyl borate, lithium 2,2,2-trifluoroethyl trimethyl borate, lithium glycerol carbonate trimethyl borate, lithium ethylene glycol methyl ether trimethyl borate, lithium diethylene glycol methyl ether trimethyl borate, lithium 4-fluorophenyl trimethyl borate, lithium 2-butynyl trimethyl borate, 3-propionitrile trimethyl borate, and lithium trifluoroethyl trimethyl borate.

7. The electrolyte composition according to any of claims 1 to 6, wherein the at least one aprotic organic solvent (i) is selected from
(a) cyclic and noncyclic organic carbonates, which may be partly halogenated,
(b) di-C₁-C₁₀-alkylethers, which may be partly halogenated,
(c) di-C₁-C₄-alkyl-C₂-C₆-alkylene ethers and polyethers, which may be partly halogenated,
(d) cyclic ethers, which may be partly halogenated,
(e) cyclic and acyclic acetals and ketals, which may be partly halogenated,
(f) orthocarboxylic acids esters, which may be partly halogenated, and
(g) cyclic and noncyclic esters of carboxylic acids, which may be partly halogenated
(h) cyclic and noncyclic sulfones, which may be partly halogenated,
(i) cyclic and noncyclic nitriles and dinitriles, which may be partly halogenated, and
(j) ionic liquids, which may be partly halogenated.

8. The electrolyte composition according to any of claims 1 to 7, wherein the electrolyte composition contains at least one conducting salt (ii) different from the at least one compound of formula (I) the at least one conducting salt (ii) being selected from the group consisting of
• Li[F₆₋ₓP(C_{y}F_{2y+1})ₓ], wherein x is an integer in the range from 0 to 6 and y is an integer in the range from 1 to 20;
• Li[B(R¹⁰)₄], Li[B(R¹⁰)₂(OR¹¹O)] and Li[B(OR¹¹O)₂],
wherein each R¹⁰ is independently from each other selected from F, Cl, Br, I, C₁-C₄ alkyl, C₂-C₄ alkenyl, and C₂-C₄ alkynyl, wherein alkyl, alkenyl, and alkynyl may be substituted by one or more OR¹², wherein R¹² is selected from C₁-C₆ alkyl, C₂-C₆ alkenyl, and C₂-C₆ alkynyl, and
wherein (OR¹¹O) is a bivalent group derived from a 1,2- or 1,3-diol, from a 1,2- or 1,3-dicarboxlic acid or from a 1,2- or 1,3-hydroxycarboxylic acid, wherein the bivalent group forms a 5- or 6-membered cycle via the both oxygen atoms with the central B-atom;
• salts of the general formula Li[X(CₙF₂ₙ₊₁SO₂)ₘ], where m and n are defined as follows:
m = 1 when X is selected from oxygen and sulfur,
m = 2 when X is selected from nitrogen and phosphorus,
m = 3 when X is selected from carbon and silicon, and
n is an integer in the range from 1 to 20,
• LiClO₄; LiAsF₆; LiCF₃SO₃; Li₂SiF₆; LiSbF₆; LiAlCl₄, Li[N(SO₂F)₂], lithium tetrafluoro (oxalato) phosphate; and lithium oxalate.

9. The electrolyte composition according to any of claims 1 to 8, wherein the electrolyte composition contains at least one further additive (iv) which is selected from the group consisting of vinylene carbonate and its derivatives, vinyl ethylene carbonate and its derivatives, methyl ethylene carbonate and its derivatives, lithium (bisoxalato) borate, lithium difluoro (oxalato) borate, lithium tetrafluoro (oxalato) phosphate, lithium oxalate, 2-vinyl pyridine, 4-vinyl pyridine, cyclic exo-methylene carbonates, sultones, cyclic and acyclic sulfonates, cyclic and acyclic sulfites, cyclic and acyclic sulfinates, organic esters of inorganic acids, acyclic and cyclic alkanes having a boiling point at 1 bar of at least 36 °C, and aromatic compounds, optionally halogenated cyclic and acyclic sulfonylimides, optionally halogenated cyclic and acyclic phosphate esters, optionally halogenated cyclic and acyclic phosphines, optionally halogenated cyclic and acyclic phosphites including, optionally halogenated cyclic and acyclic phosphazenes, optionally halogenated cyclic and acyclic silylamines, optionally halogenated cyclic and acyclic esters, optionally halogenated cyclic and acyclic amides, optionally halogenated cyclic and acyclic anhydrides, optionally halogenated organic heterocycles.

10. The electrolyte composition according to any of claims 1 to 9, wherein the electrolyte composition contains
(i) from 60 to 99.98 wt.-% of at least one aprotic organic solvent,
(ii) from 0.01 to 25 wt.-% of at least one conducting salt different from the at least one compound of formula (I),
(iii) from 0.01 to 25 wt.-% of at least one compound of formula (I), and
(iv) from 0 to 10 wt.-% of at least one further additive,
based on the total weight of the electrolyte composition.

11. The use of compounds of formula (I) as defined in any of claims 1 to 6 as additives for electrolytes in lithium ion batteries.

12. A lithium ion battery comprising
(A) the electrolyte composition according to any of claims 1 to 10,
(B) at least one cathode comprising a cathode active material, and
(C) at least one anode comprising an anode active material.

13. The lithium ion battery according to claim 12, wherein the anode active material contains carbon capable of reversibly occluding and releasing lithium ions.

14. The lithium ion battery according to claim 12, wherein the anode active material contains silicon or tin.

15. The lithium ion battery according to any of claims 12 to 14 wherein the at least one cathode active material comprises a material capable of occluding and releasing lithium ions selected from lithiated transition metal phosphates of olivine structure; lithium ion intercalating transition metal oxides with layer structure; and lithiated transition metal mixed oxides of spinel structure.

16. The lithium ion battery according to any of claims 12 to 15, wherein the at least one cathode active material is selected from LiFePO₄, LiCoPO₄, transition metal oxides with layer structure of general formula Li_{(1+z)}[NiₐCo_{b}Mn_{c}]_{(1-z)}O₂₊ₑ wherein z is 0 to 0.3, a, b and c may be same or different and are independently 0 to 0.8 wherein a + b + c = 1; and -0.1 ≤ e ≤ 0.1; and lithiated transition metal mixed oxides of spinel structure of general formula Li₁₊ₜM₂₋ₜO_{4-d} wherein d is 0 to 0.4, t is 0 to 0.4, while more than 60 mol% of M is manganese and further M's, from which not more than 30 mol% is chosen, are one or more metals from groups 3 to 12 of the periodic table.

## Patentansprüche

1. Elektrolytzusammensetzung (A), enthaltend
(i) mindestens ein aprotisches organisches Lösungsmittel,
(ii) mindestens ein Leitsalz, das von der mindestens einen Verbindung der Formel (I) verschieden ist,
(iii) mindestens eine Verbindung der Formel (I), 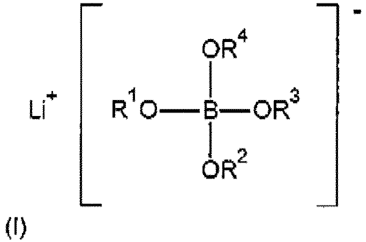 in der
R¹, R², R³ und R⁴ aus C₁-C₁₀-Alkyl, C₂-C₁₀-Alkenyl, C₂-C₁₀-Alkinyl, C₃-C₁₀-Cycloalkyl, C₆-C₁₄-Aryl und C₅-C₁₄-Heteroaryl ausgewählt sind, wobei Alkyl, Alkenyl, Alkinyl, Cycloalkyl, Aryl und Heteroaryl durch einen oder mehrere Substituenten, die aus F, CN, OR⁵, 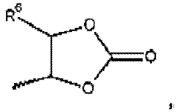 und gegebenenfalls fluorierten Gruppen, die aus C₁-C₄-Alkyl, C₂-C₄-Alkenyl, C₂-C₄-Alkinyl, Phenyl und Benzyl ausgewählt sind, ausgewählt sind, substituiert sein können, wobei R⁴ von jedem R¹, R² und R³ verschieden ist,
R⁵ aus H, Oligo-C₁-C₄-alkylenoxid mit 2 bis 10 Alkylenoxid-Einheiten und gegebenenfalls fluorierten Gruppen, die aus C₁-C₄-Alkyl, C₂-C₄-Alkenyl, C₂-C₄-Alkinyl, Phenyl, Benzyl und C(O)O-C₁-C₁₀-Alkyl ausgewählt sind, ausgewählt ist,
R⁶ aus H, F und gegebenenfalls fluoriertem C₁-C₄-Alkyl ausgewählt ist; und
(iv) gegebenenfalls mindestens ein weiteres Additiv.

2. Elektrolytzusammensetzung nach Anspruch 1, wobei mindestens eine Verbindung der Formel (I) aus Verbindungen der Formel (I) ausgewählt ist, wobei
R¹, R², R³ und R⁴ unabhängig voneinander aus C₁-C₆-Alkyl, C₂-C₆-Alkenyl, C₂-C₆-Alkinyl, C₃-C₈-Cycloalkyl, C₆-C₁₄-Aryl und C₅-C₁₄-Heteroaryl ausgewählt sind, wobei Alkyl, Alkenyl, Alkinyl, Cycloalkyl, Aryl und Heteroaryl durch einen oder mehrere Substituenten, die aus F, CN, OR⁵, 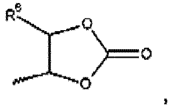 und gegebenenfalls fluorierten Gruppen, die aus C₁-C₄-Alkyl, C₂-C₄-Alkenyl, C₂-C₄-Alkinyl, Phenyl und Benzyl ausgewählt sind, ausgewählt sind, substituiert sein können,
R⁵ aus H, Oligo-C₂-C₃-alkylenoxid mit 2 bis 10 Alkylenoxid-Einheiten und gegebenenfalls fluorierten Gruppen, die aus C₁-C₄-Alkyl, C₂-C₄-Alkenyl, C₂-C₄-Alkinyl, Phenyl, Benzyl und C(O)O-C₁-C₄-Alkyl ausgewählt sind, ausgewählt ist,
R⁶ aus H, F und gegebenenfalls fluoriertem C₁-C₄-Alkyl ausgewählt ist.

3. Elektrolytzusammensetzung nach Anspruch 1 oder 2, wobei die mindestens eine Verbindung der Formel (I) aus Verbindungen der Formel (I) ausgewählt ist, wobei
R¹, R² und R³ für gegebenenfalls fluoriertes C₁-C₆-Alkyl stehen und
R⁴ aus C₁-C₆-Alkyl, C₂-C₆-Alkenyl, C₂-C₆-Alkinyl, C₃-C₆-Cycloalkyl, C₆-C₁₄-Aryl und C₅-C₁₄-Heteroaryl ausgewählt ist, wobei Alkyl, Alkenyl, Alkinyl, Cycloalkyl, Aryl und Heteroaryl durch einen oder mehrere Substituenten, die aus F, CN, OR⁵, 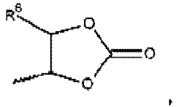 und gegebenenfalls fluorierten Gruppen, die aus C₁-C₄-Alkyl, C₂-C₄-Alkenyl, C₂-C₄-Alkinyl, Phenyl und Benzyl ausgewählt sind, ausgewählt sind, substituiert sein können,
R⁵ aus H, Oligo-C₁-C₄-alkylenoxid mit 2 bis 10 Alkylenoxid-Einheiten und gegebenenfalls fluorierten Gruppen, die aus C₁-C₄-Alkyl, C₂-C₄-Alkenyl, C₂-C₄-Alkinyl, Phenyl, Benzyl und C(O)O-C₁-C₄-Alkyl ausgewählt sind, ausgewählt ist,
R⁶ aus H, F und gegebenenfalls fluoriertem C₁-C₄-Alkyl ausgewählt ist.

4. Elektrolytzusammensetzung nach Anspruch 1, wobei die mindestens eine Verbindung der Formel (I) aus Verbindungen der Formel (I) ausgewählt ist, wobei
R¹, R² und R³ für CH₃ stehen und
R⁴ aus C₂-C₁₀-Alkyl, C₂-C₁₀-Alkenyl, C₂-C₁₀-Alkinyl, C₃-C₁₀-Cycloalkyl, C₆-C₁₄-Aryl und C₅-C₁₄-Heteroaryl ausgewählt ist, wobei Alkyl, Alkenyl, Alkinyl, Cycloalkyl, Aryl und Heteroaryl durch einen oder mehrere Substituenten, die aus F, CN, OR⁵, 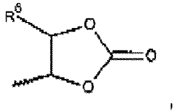 und gegebenenfalls fluorierten Gruppen, die aus C₁-C₄-Alkyl, C₂-C₄-Alkenyl, C₂-C₄-Alkinyl, Phenyl und Benzyl ausgewählt sind, ausgewählt sind, substituiert sein können,
R⁵ aus H, Oligo-C₁-C₄-alkylenoxid mit 2 bis 10 Alkylenoxid-Einheiten und gegebenenfalls fluorierten Gruppen, die aus C₁-C₄-Alkyl, C₂-C₄-Alkenyl, C₂-C₄-Alkinyl, Phenyl, Benzyl und C(O)O-C₁-C₁₀-Alkyl ausgewählt sind, ausgewählt ist,
R⁶ aus H, F und gegebenenfalls fluoriertem C₁-C₄-Alkyl ausgewählt ist.

5. Elektrolytzusammensetzung nach einem der Ansprüche 1 bis 4, wobei die mindestens eine Verbindung der Formel (I) aus Verbindungen der Formel (I) ausgewählt ist, wobei
R¹, R² und R³ für CH₃ stehen und
R⁴ aus C₂-C₄-Alkyl, C₂-C₄-Alkenyl, C₂-C₄-Alkinyl, C₃-C₆-Cycloalkyl, C₆-Aryl und C₅-C₇-Heteroaryl ausgewählt ist, wobei Alkyl, Alkenyl, Alkinyl, Cycloalkyl, Aryl und Heteroaryl durch einen oder mehrere Substituenten, die aus F, CN, OR⁵, 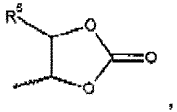 und gegebenenfalls fluorierten Gruppen, die aus C₁-C₄-Alkyl, C₂-C₄-Alkenyl, C₂-C₄-Alkinyl, Phenyl und Benzyl ausgewählt sind, ausgewählt sind, substituiert sein können,
R⁵ aus H, Oligo-C₂-C₃-alkylenoxid mit 2 bis 10 Alkylenoxid-Einheiten und gegebenenfalls fluorierten Gruppen, die aus C₁-C₄-Alkyl, Phenyl, Benzyl und C(O)O-C₁-C₄-Alkyl ausgewählt sind, ausgewählt ist, R⁶ aus H, F und gegebenenfalls fluoriertem C₁-C₄-Alkyl ausgewählt ist.

6. Elektrolytzusammensetzung nach einem der Ansprüche 1 bis 5, wobei die mindestens eine Verbindung der Formel (I) aus Lithium-3-allyltrimethylborat, Lithium-3-propargyltrimethylborat, Lithiumphenyltrimethylborat, Lithium-4-pyridyltrimethylborat, Lithium-3-pyridyltrimethylborat, Lithium-2-pyridyltrimethylborat, Lithium-2,2,2-trifluorethyltrimethylborat, Lithiumglycerincarbonattrimethylborat, Lithiumethylenglykolmethylethertrimethylborat, Lithiumdiethylenglykolmethylethertrimethylborat, Lithium-4-fluorphenyltrimethylborat, Lithium-2-butinyltrimethylborat, 3-Propionitriltrimethylborat und Lithiumtrifluorethyltrimethylborat ausgewählt ist.

7. Elektrolytzusammensetzung nach einem der Ansprüche 1 bis 6, wobei das mindestens eine aprotische Lösungsmittel (i) aus
(a) cyclischen und nicht-cyclischen organischen Carbonaten, die teilhalogeniert sein können,
(b) Di-C₁-C₁₀-alkylethern, die teilhalogeniert sein können,
(c) Di-C₁-C₄-alkyl-C₂-C₆-alkylenethern und Polyethern, die teilhalogeniert sein können,
(d) cyclischen Ethern, die teilhalogeniert sein können,
(e) cyclischen und acyclischen Acetalen und Ketalen, die teilhalogeniert sein können,
(f) Orthocarbonsäureestern, die teilhalogeniert sein können,
(g) cyclischen und nicht-cyclischen Estern von Carbonsäuren, die teilhalogeniert sein können,
(h) cyclischen und nicht-cyclischen Sulfonen, die teilhalogeniert sein können,
(i) cyclischen und nicht-cyclischen Nitrilen und Dinitrilen, die teilhalogeniert sein können, und
(j) ionischen Flüssigkeiten, die teilhalogeniert sein können,
ausgewählt ist.

8. Elektrolytzusammensetzung nach einem der Ansprüche 1 bis 7, wobei die Elektrolytzusammensetzung mindestens ein Leitsalz (ii), das von der mindestens eine Verbindung der Formel (I) verschieden ist, enthält, wobei das mindestens eine Leitsalz (ii) aus der Gruppe bestehend aus
• Li[F₆₋ₓP(C_{y}F_{2y+1})ₓ], wobei x für eine ganze Zahl im Bereich von 0 bis 6 steht und y für eine ganze Zahl im Bereich von 1 bis 20 steht;
• Li[B(R¹⁰)₄], Li[B(R¹⁰)₂[OR¹¹O)] und Li[B[OR¹¹O)₂], wobei R¹⁰ jeweils unabhängig voneinander aus F, Cl, Br, I, C₁-C₄-Alkyl, C₂-C₄-Alkenyl und C₂-C₄-Alkinyl ausgewählt ist, wobei Alkyl, Alkenyl und Alkinyl durch ein oder mehrere OR¹² substituiert sein können, wobei R¹² aus C₁-C₆-Alkyl, C₂-C₆-Alkenyl und C₂-C₆-Alkinyl ausgewählt ist, und wobei (OR¹¹O) für eine zweiwertige Gruppe steht, die sich von einem 1,2- oder 1,3-Diol, einer 1,2- oder 1,3-Dicarbonsäure oder einer 1,2- oder 1,3-Hydroxycarbonsäure ableitet, wobei die zweiwertige Gruppe über die beiden Sauerstoffatome mit dem zentralen B-Atom einen 5- oder 6-gliedrigen Ring bildet;
• Salzen der allgemeinen Formel Li[X(CₙF₂ₙ₊₁SO₂)ₘ], wobei m und n folgendermaßen definiert sind:
m = 1, wenn X aus Sauerstoff und Schwefel ausgewählt ist,
m = 2, wenn X aus Stickstoff und Phosphor ausgewählt ist,
m = 3, wenn X aus Kohlenstoff und Silicium ausgewählt ist, und
n steht für eine ganze Zahl im Bereich von 1 bis 20;
• LiClO₄; LiAsF₆; LiCF₃SO₃; Li₂SiF₆; LiSbF₆; LiAlCl₄; Li[N(SO₂F)₂], Lithiumtetrafluoro(oxalato)phosphat und Lithiumoxalat
ausgewählt ist.

9. Elektrolytzusammensetzung nach einem der Ansprüche 1 bis 8, wobei die Elektrolytzusammensetzung mindestens ein weiteres Additiv (iv) enthält, das aus der Gruppe bestehend aus Vinylencarbonat und Derivaten davon, Vinylethylencarbonat und Derivaten davon, Methylethylencarbonat und Derivaten davon, Lithium(bisoxalato)borat, Lithiumdifluoro-(oxalato)borat, Lithiumtetrafluoro(oxalato)-phosphat, Lithiumoxalat, 2-Vinylpyridin, 4-Vinylpyridin, cyclischen exo-Methylencarbonaten, Sultonen, organischen Estern anorganischer Säuren, acyclischen und cyclischen Alkanen mit einem Siedepunkt bei 1 bar von mindestens 36°C und aromatischen Verbindungen, gegebenenfalls halogenierten cyclischen und acyclischen Sulfonylimiden, gegebenenfalls halogenierten cyclischen und acyclischen Phosphatestern, gegebenenfalls halogenierten cyclischen und acyclischen Phosphinen, gegebenenfalls halogenierten cyclischen und acyclischen Phosphiten, gegebenenfalls halogenierten cyclischen und acyclischen Phosphazenen, gegebenenfalls halogenierten cyclischen und acyclischen Silylaminen, gegebenenfalls halogenierten cyclischen und acyclischen Estern, gegebenenfalls halogenierten cyclischen und acyclischen Amiden, gegebenenfalls halogenierten cyclischen und acyclischen Anhydriden und gegebenenfalls halogenierten organischen Heterocyclen ausgewählt ist.

10. Elektrolytzusammensetzung nach einem der Ansprüche 1 bis 9, wobei die Elektrolytzusammensetzung
(i) 60 bis 99,98 Gew.-% des mindestens einen aprotischen organischen Lösungsmittels,
(ii) 0,01 bis 25 Gew.-% des mindestens einen Leitsalzes, das von der mindestens eine Verbindung der Formel (I) verschieden ist,
(iii) 0,01 bis 25 Gew.-% der mindestens einen Verbindung der Formel (I) und
(iv) 0 bis 10 Gew.-% des mindestens einen weiteren Additivs,
bezogen auf das Gesamtgewicht der Elektrolytzusammensetzung, enthält.

11. Verwendung mindestens einer Verbindung der Formel (I) nach einem der Ansprüche 1 bis 6 als Additiv für Elektrolyte in Lithiumionenbatterien.

12. Lithiumionenbatterie, umfassend
(A) die Elektrolytzusammensetzung nach einem der Ansprüche 1 bis 10,
(B) mindestens eine Kathode mit mindestens einem Kathodenaktivmaterial und
(C) mindestens eine Anode mit mindestens einem Anodenaktivmaterial.

13. Lithiumionenbatterie nach Anspruch 12, wobei das Anodenaktivmaterial zur reversiblen Einschließung und Freisetzung von Lithiumionen befähigten Kohlenstoff enthält.

14. Lithiumionenbatterie nach Anspruch 12, wobei das Anodenaktivmaterial Silicium oder Zinn enthält.

15. Lithiumionenbatterie nach einem der Ansprüche 12 bis 14, wobei das mindestens eine Kathodenaktivmaterial ein zur Einschließung und Freisetzung von Lithiumionen befähigtes Material umfasst, das aus lithiierten Übergangsmetallphosphaten mit Olivin-Struktur; Lithiumionen interkalierenden Übergangsmetalloxiden mit Schichtstruktur und lithiierten Übergangsmetallmischoxiden mit Spinell-Struktur ausgewählt ist.

16. Lithiumionenbatterie nach einem der Ansprüche 12 bis 15, wobei das mindestens eine Kathodenaktivmaterial aus LiFePO₄, LiCoPO₄, Übergangsmetalloxiden mit Schichtstruktur der allgemeinen Formel Li_{(1+z)}[NiₐCo_{b}Mn_{c}]_{(1-z)}O₂₊ₑ, wobei z für 0 bis 0,3 steht, a, b und c gleich oder verschieden sein können und unabhängig für 0 bis 0,8 stehen, wobei a + b + c = 1; und -0,1 ≤ e ≤ 0,1; und lithiierten Übergangsmetallmischoxiden mit Spinell-Struktur der allgemeinen Formel Li₁₊ₜM₂₋ₜO_{4-d}, wobei d für 0 bis 0, 4 steht, t für 0 bis 0,4 steht, während mehr als 60 Mol-% von M Mangan ist und weitere M, von denen nicht mehr als 30 Mol-% gewählt werden, ein oder mehrere Metalle aus den Gruppen 3 bis 12 des Periodensystems sind, ausgewählt ist.

## Revendications

1. Composition d'électrolyte (A) contenant
(i) au moins un solvant organique aprotique,
(ii) au moins un sel conducteur différent de l'au moins un composé de formule (I),
(iii) au moins un composé de formule (I), 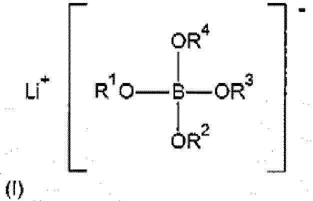 dans laquelle
R¹, R², R³ et R⁴ sont choisis parmi les groupes alkyle en C₁-C₁₀, alcényle en C₂-C₁₀, alcynyle en C₂-C₁₀, cycloalkyle en C₃-C₁₀, aryle en C₆-C₁₄ et hétéroaryle en C₅-C₁₄, les groupes alkyle, alcényle, alcynyle, cycloalkyle, aryle et hétéroaryle pouvant être substitués par un ou plusieurs substituants choisis parmi F, CN, OR⁵, 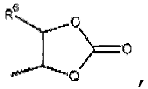 et des groupes éventuellement fluorés choisis parmi les groupes alkyle en C₁-C₄, alcényle en C₂-C₄, alcynyle en C₂-C₄, phényle, et benzyle,
dans laquelle R⁴ est différent à la fois de R¹, R² et R³,
R⁵ est choisi parmi H, un oligo-oxyde d'alkylène en C₁-C₄ avec 2 à 10 motifs oxyde d'alkylène, et des groupes éventuellement fluorés choisis parmi les groupes alkyle en C₁-C₄, alcényle en C₂-C₄, alcynyle en C₂-C₄, phényle, benzyle, et C(O)O-alkyle en C₁-C₁₀,
R⁶ est choisi parmi H, F et un alkyle en C₁-C₄ éventuellement fluoré ; et
(iv) éventuellement, au moins un autre additif.

2. Composition d'électrolyte selon la revendication 1, dans laquelle au moins un composé de formule (I) est choisi parmi les composés de formule (I) dans laquelle
R¹, R², R³ et R⁴ sont choisis indépendamment les uns des autres parmi les groupes alkyle en C₁-C₆, alcényle en C₂-C₆, alcynyle en C₂-C₆, cycloalkyle en C₃-C₆, aryle en C₆-C₁₄ et hétéroaryle en C₅-C₁₄, les groupes alkyle, alcényle, alcynyle, cycloalkyle, aryle et hétéroaryle pouvant être substitués par un ou plusieurs substituants choisis parmi F, CN, OR⁵, 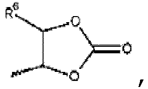 et des groupes éventuellement fluorés choisis parmi les groupes alkyle en C₁-C₄, alcényle en C₂-C₄, alcynyle en C₂-C₄, phényle, et benzyle,
R⁵ est choisi parmi H, un oligo-oxyde d'alkylène en C₂-C₃ avec 2 à 10 motifs oxyde d'alkylène, et des groupes éventuellement fluorés choisis parmi les groupes alkyle en C₁-C₄, alcényle en C₂-C₄, alcynyle en C₂-C₄, phényle, benzyle, et C(O)O-alkyle en C₁-C₄,
R⁶ est choisi parmi H, F et un alkyle en C₁-C₄ éventuellement fluoré.

3. Composition d'électrolyte selon la revendication 1 ou 2, dans laquelle l'au moins un composé de formule (I) est choisi parmi les composés de formule (I) dans laquelle
R¹, R² et R³ sont des groupes alkyle en C₁-C₆ éventuellement fluorés, et
R⁴ est choisi parmi les groupes alkyle en C₁-C₆, alcényle en C₂-C₆, alcynyle en C₂-C₆, cycloalkyle en C₃-C₆, aryle en C₆-C₁₄ et hétéroaryle en C₅-C₁₄, les groupes alkyle, alcényle, alcynyle, cycloalkyle, aryle et hétéroaryle pouvant être substitués par un ou plusieurs groupes choisis parmi F, CN, OR⁵, 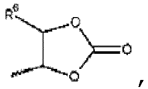 et des groupes éventuellement fluorés choisis parmi les groupes alkyle en C₁-C₄, alcényle en C₂-C₄, alcynyle en C₂-C₄, phényle, et benzyle,
R⁵ est choisi parmi H, un oligo-oxyde d'alkylène en C₁-C₄ avec 2 à 10 motifs oxyde d'alkylène, et des groupes éventuellement fluorés choisis parmi les groupes alkyle en C₁-C₄, alcényle en C₂-C₄, alcynyle en C₂-C₄, phényle, benzyle, et C(O)O-alkyle en C₁-C₄,
R⁶ est choisi parmi H, F et un alkyle en C₁-C₄ éventuellement fluoré.

4. Composition d'électrolyte selon la revendication 1, dans laquelle l'au moins un composé de formule (I) est choisi parmi les composés de formule (I) dans laquelle
R¹, R² et R³ sont des groupes CH₃, et
R⁴ est choisi parmi les groupes alkyle en C₂-C₁₀, alcényle en C₂-C₁₀, alcynyle en C₂-C₁₀, cycloalkyle en C₃-C₁₀, aryle en C₆-C₁₄ et hétéroaryle en C₅-C₁₄, les groupes alkyle, alcényle, alcynyle, cycloalkyle, aryle et hétéroaryle pouvant être substitués par un ou plusieurs substituants choisis parmi F, CN, OR⁵, 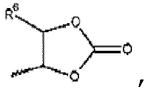 et des groupes éventuellement fluorés choisis parmi les groupes alkyle en C₁-C₄, alcényle en C₂-C₄, alcynyle en C₂-C₄, phényle, et benzyle,
R⁵ est choisi parmi H, un oligo-oxyde d'alkylène en C₁-C₄ avec 2 à 10 motifs oxyde d'alkylène, et des groupes éventuellement fluorés choisis parmi les groupes alkyle en C₁-C₄, alcényle en C₂-C₄, alcynyle en C₂-C₄, phényle, benzyle, et C(O)O-alkyle en C₁-C₁₀, et
R⁶ est choisi parmi H, F et un alkyle en C₁-C₄ éventuellement fluoré.

5. Composition d'électrolyte selon l'une quelconque des revendications 1 à 4, dans laquelle l'au moins un composé de formule (I) est choisi parmi les composés de formule (I) dans laquelle
R¹, R² et R³ sont des groupes CH₃, et
R⁴ est choisi parmi les groupes alkyle en C₂-C₄, alcényle en C₂-C₄, alcynyle en C₂-C₄, cycloalkyle en C₃-C₆, aryle en C₆ et hétéroaryle en C₅-C₇, les groupes alkyle, alcényle, alcynyle, cycloalkyle, aryle et hétéroaryle pouvant être substitués par un ou plusieurs groupes choisis parmi F, CN, OR⁵, 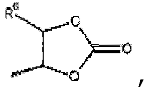 et des groupes éventuellement fluorés choisis parmi les groupes alkyle en C₁-C₄, alcényle en C₂-C₄, alcynyle en C₂-C₄, phényle, et benzyle, et
R⁵ est choisi parmi H, un oligo-oxyde d'alkylène en C₂-C₃ avec 2 à 10 motifs oxyde d'alkylène, et des groupes éventuellement fluorés choisis parmi les groupes alkyle en C₁-C₄, phényle, benzyle, et C(O)O-alkyle en C₁-C₄,
R⁶ est choisi parmi H, F et un alkyle en C₁-C₄ éventuellement fluoré.

6. Composition d'électrolyte selon l'une quelconque des revendications 1 à 5, dans laquelle l'au moins un composé de formule (I) est choisi parmi le 3-allyltriméthylborate de lithium, le 3-propargyltriméthylborate de lithium, le phényltriméthylborate de lithium, le 4-pyridyltriméthylborate de lithium, le 3-pyridyltriméthylborate de lithium, le 2-pyridyltriméthylborate de lithium, le 2,2,2-trifluoroéthyltriméthylborate de lithium, le triméthylborate de lithium de carbonate de glycérol, le triméthylborate de lithium d'éther méthylique d'éthylène glycol, le triméthylborate de lithium d'éther méthylique de diéthylène glycol, le 4-fluorophényltriméthylborate de lithium, le 2-butynyltriméthylborate de lithium, le triméthylborate de 3-propionitrile, et le trifluoroéthyltriméthylborate de lithium.

7. Composition d'électrolyte selon l'une quelconque des revendications 1 à 6, dans laquelle l'au moins un solvant organique aprotique (i) est choisi parmi
(a) les carbonates organiques cycliques et acycliques, qui peuvent être partiellement halogénés,
(b) les éthers de dialkyle en C₁-C₁₀, qui peuvent être partiellement halogénés,
(c) les éthers et polyéthers de di(alkyl en C₁-C₄-alkylène en C₂-C₆), qui peuvent être partiellement halogénés,
(d) les éthers cycliques, qui peuvent être partiellement halogénés,
(e) les acétals et cétals cycliques et acycliques, qui peuvent être partiellement halogénés,
(f) les esters d'acides orthocarboxyliques, qui peuvent être partiellement halogénés, et
(g) les esters cycliques et acycliques d'acides carboxyliques, qui peuvent être partiellement halogénés,
(h) les sulfones cycliques et acycliques, qui peuvent être partiellement halogénées,
(i) les nitriles et dinitriles cycliques et acycliques, qui peuvent être partiellement halogénés, et
(j) les liquides ioniques, qui peuvent être partiellement halogénés.

8. Composition d'électrolyte selon l'une quelconque des revendications 1 à 7, la composition d'électrolyte contenant au moins un sel conducteur (ii) différent de l'au moins un composé de formule (I), l'au moins un sel conducteur (ii) étant choisi dans le groupe constitué par
• Li[F₆₋ₓP(C_{y}F_{2y+1})ₓ], dans lequel x est un entier dans la gamme de 0 à 6 et y est un entier dans la gamme de 1 à 20 ;
• Li[B(R¹⁰)₄], Li[B(R¹⁰)₂(OR¹¹O)] et Li[B(OR¹¹O)₂], dans lesquels chaque R¹⁰ est choisi indépendamment des autres parmi F, Cl, Br, I, les groupes alkyle en C₁-C₄, alcényle en C₂-C₄, et alcynyle en C₂-C₄, les groupes alkyle, alcényle et alcynyle pouvant être substitués par un ou plusieurs OR¹², R¹² étant choisi parmi les groupes alkyle en C₁-C₆, alcényle en C₂-C₆, et alcynyle en C₂-C₆, et
dans lesquels (OR¹¹O) est un groupe divalent dérivé d'un 1,2- ou 1,3-diol, d'un acide 1,2- ou 1,3-dicarboxylique ou d'un acide 1,2- ou 1,3-hydroxy-carboxylique, le groupe divalent formant un cycle à 5 ou 6 chaînons par le biais des deux atomes d'oxygène avec l'atome B central ;
• les sels de la formule générale Li[X(CₙF₂ₙ₊₁SO₂)ₘ], où m et n sont définis comme suit :
m = 1 quand X est choisi entre l'oxygène et le soufre,
m = 2 quand X est choisi entre l'azote et le phosphore,
m = 3 quand X est choisi entre le carbone et le silicium, et
n est un entier dans la gamme de 1 à 20,
• LiClO₄⁻ ; LiAsF₆ ; LiCF₃SO₃⁻ ; Li₂SiF₆ ; LiSbF₆ ; LiAlCl₄ ; Li[N(SO₂F)₂], le tétrafluoro (oxalato)phosphate de lithium ; et l'oxalate de lithium.

9. Composition d'électrolyte selon l'une quelconque des revendications 1 à 8, la composition d'électrolyte contenant au moins un autre additif (iv) qui est choisi dans le groupe constitué par le carbonate de vinylène et ses dérivés, le carbonate de vinyléthylène et ses dérivés, le carbonate de méthyléthylène et ses dérivés, le (bisoxalato)borate de lithium, le difluoro(oxalato)borate de lithium, tétrafluoro(oxalato)phosphate de lithium, l'oxalate de lithium, la 2-vinylpyridine, la 4-vinylpyridine, les carbonates d'exométhylène cycliques, les sulfones, les sulfonates cycliques et acycliques, les sulfites cycliques et acycliques, les sulfinates cycliques et acycliques, les esters organiques d'acides inorganiques, les alcanes acycliques et cycliques ayant un point d'ébullition à 1 bar d'au moins 36 °C, et les composés aromatiques, les sulfonylimides cycliques et acycliques éventuellement halogénés, les esters de phosphate cycliques et acycliques éventuellement halogénés, les phosphines cycliques et acycliques éventuellement halogénées, les phosphites cycliques et acycliques éventuellement halogénés dont les phosphazènes cycliques et acycliques éventuellement halogénés, les silylamines cycliques et acycliques éventuellement halogénées, les esters cycliques et acycliques éventuellement halogénés, les amides cycliques et acycliques éventuellement halogénés, les anhydrides cycliques et acycliques éventuellement halogénés, les hétérocycles organiques éventuellement halogénés.

10. Composition d'électrolyte selon l'une quelconque des revendications 1 à 8, la composition d'électrolyte contenant
(i) de 60 à 99,98 % en poids d'au moins un solvant organique aprotique,
(ii) de 0,01 à 25 % en poids d'au moins un sel conducteur différent de l'au moins un composé de formule (I),
(iii) de 0,01 à 25 % en poids d'au moins un composé de formule (I), et
(iv) de 0 à 10 % en poids d'au moins un autre additif,
rapporté au poids total de la composition d'électrolyte.

11. Utilisation de composés de formule (I) tels que définis dans l'une quelconque des revendications 1 à 6 comme additifs pour électrolytes dans des batteries au lithium-ion.

12. Batterie au lithium-ion comprenant
(A) la composition d'électrolyte selon l'une quelconque des revendications 1 à 10,
(B) au moins une cathode comprenant un matériau actif de cathode, et
(C) au moins une anode comprenant un matériau actif d'anode.

13. Batterie au lithium-ion selon la revendication 12, dans laquelle le matériau actif d'anode contient du carbone susceptible d'enfermer et libérer de façon réversible des ions lithium.

14. Batterie au lithium-ion selon la revendication 12, dans laquelle le matériau actif d'anode contient du silicium ou de l'étain.

15. Batterie au lithium-ion selon l'une quelconque des revendications 12 à 14 dans laquelle l'au moins un matériau actif de cathode comprend un matériau susceptible d'enfermer et libérer des ions lithium choisi parmi les phosphates de métaux de transition lithiés de structure olivine ; les oxydes de métaux de transition avec intercalation d'ions lithium avec une structure stratifiée ; et les oxydes mixtes de métaux de transition lithiés de structure spinelle.

16. Batterie au lithium-ion selon l'une quelconque des revendications 12 à 15, dans laquelle l'au moins un matériau actif de cathode est choisi parmi LiFePO₄, LiCoPO₄, les oxydes de métaux de transition avec une structure stratifiée de formule générale Li_{(i+z)}[NiₐCo_{b}Mn_{c}]_{(1-z)}O₂₊ₑ dans laquelle z vaut 0 à 0,3, a, b et c peuvent être identiques ou différents et valent indépendamment 0 à 0,8, avec a + b + c = 1 ; et -0,1 ≤ e ≤ 0,1 ; et les oxydes mixtes de métaux de transition lithiés de structure spinelle de formule générale Li₁₊ₜM₂₋ₜO_{4-d} dans laquelle d vaut 0 à 0,4, t vaut 0 à 0,4, tandis que plus de 60 % en moles des M représentent le manganèse et d'autres M, dont pas plus de 30 % en moles sont choisis, représentent un ou plusieurs métaux des groupes 3 à 12 du tableau périodique.
